(19) Europäisches Patentamt
European Patent Office
Office européen des brevets

(11) Veröffentlichungsnummer: 0 154 811
A2

(12) # EUROPÄISCHE PATENTANMELDUNG

(21) Anmeldenummer: 85101341.7

(22) Anmeldetag: 08.02.85

(51) Int. Cl.⁴: **C 07 C 161/00**, C 07 C 135/00, C 08 K 5/43, C 08 K 5/28, C 08 K 9/04

(30) Priorität: 08.02.84 DE 3404456

(43) Veröffentlichungstag der Anmeldung: 18.09.85 Patentblatt 85/38

(84) Benannte Vertragsstaaten: AT BE DE FR IT NL

(71) Anmelder: Plüss-Staufer AG, CH-4665 Oftringen (CH)

(72) Erfinder: Schlumpf, Hans-Peter, Dr. Dipl.-Ing., Berglíweg 8, CH-4665 Oftringen 2 (CH)
Erfinder: Haldemann, Peter, Brunnhaldenweg 30, CH-4852 Rothrist (CH)

(74) Vertreter: Reinhard, Skuhra, Weise, Leopoldstrasse 51, D-8000 München 40 (DE)

(54) **Kupplungsmittel zwischen mineralischen Füllstoffen und Polymeren.**

(57) Es werden neue Kupplungsmittel zwischen mineralischen Füllstoffen, insbesondere $CaCO_3$ einerseits und Polymeren andererseits, Zwischenprodukte zur Herstellung dieser Kupplungsmittel, Verfahren zur Herstellung dieser Kupplungsmittel, Verfahren zur Herstellung der genannten Zwischenprodukte, mineralische Füllstoffe und Verfahren zur Herstellung dieser mineralischen Füllstoffe offenbart. Die neuen Kupplungsmittel sind gekennzeichnet durch die allgemeine Formel Y–R–X, worin Y eine oder mehrere Säuregruppen oder deren Alkali- oder Erdalkali-salz(e), Y eine oder mehrere reaktive Gruppen aus der Klasse der organischen Azide als Nitrenquelle und R ein chemisches Verbindungsstück zwischen den beiden reaktiven Gruppen X und Y in Form eines aliphatischen und/oder olefinischen und/oder aromatischen Zwischenstücks mit 2–40 C-Atomen bedeuten. Besonders günstige Eigenschaften weisen die Kupplungsmittel aus der Gruppe der Azidosulfonylcarbonsäuren mit der allgemeinen Formel $N_3SO_2$–A–Z–B–COOH auf, wobei
A,B = aliphatische und/oder aromatische Reste mit jeweils 2-18 C-Atomen und
Z = O, S, N bedeuten.

EP 0 154 811 A2

Anmelder: Plüss Staufer AG
CH-4665 Oftringen (Schweiz)

---

Kupplungsmittel zwischen mineralischen Füllstoffen und Polymeren

---

Die vorliegende Erfindung betrifft Kupplungsmittel zwischen mineralischen Füllstoffen, insbesondere $CaCO_3$ einerseits und Polymeren andererseits, Zwischenprodukte zur Herstellung dieser Kupplungsmittel, Verfahren zur Herstellung dieser Kupplungsmittel, Verfahren zur Herstellung der genannten Zwischenprodukte, mineralische Füllstoffe und Verfahren zur Herstellung dieser mineralischen Füllstoffe.

Es ist bekannt, daß durch den Zusatz von anorganischen Füllstoffen wie Carbonaten oder Silikaten die mechanischen, elektrischen und thermischen Eigenschaften von Kunststoffen verbessert werden können. Diese Füllstoffe sind jedoch meistens hydrophil und zeigen eine schlechte Verträglichkeit mit apolaren Polymeren wie Polyolefinen.

Dies führt bei mit anorganischen Substanzen gefüllten Polymeren zu einer Verschlechterung einiger mechanischer Eigenschaften.

Es ist weiterhin bekannt, natürliche Calciumcarbonate mit Stoffen zu beschichten, um ihre Verteilbarkeit in Kunststoffen zu verbessern. Zu diesen Stoffen gehören gesättigte und ungesättigte Fettsäuren von mittlerem oder hohem Molekulargewicht, z.B. Buttersäure, Laurinsäure, Oelsäure, Stearinsäure (vgl. DT-PS 958 830, Japan Kokai 7776, 354; Japan Kokai 7434, 937; Japan Kokai Tokkyo Koho 79, 124, 050).

Auch Ester werden zur Beschichtung von natürlichen Calcium-carbonaten verwendet (DE-OS 2 646 965; BE-PS 878 559; DE-OS 29 36 510) sowie phosphororganische Verbindungen (EP 0013 142; DE-OS 2 735 160), Salze von Fettsäuren (Japan Kokai Tokkyo Koho 78, 142 455; Japan Kokai 79 124 050) und polymere Verbindungen (Japan Kokai 74 349 37; DE-OS 2 735 160; Japan Kokai 7527, 842).

Es hat sich jedoch gezeigt, daß diesemit der Verwendung von modifizierten Erdalkalicarbonaten erzielten Verbesserungen der mechanischen Eigenschaften insbesondere bei Polyolefinen noch nicht ausreichen.

Natürliche und künstliche Silikate (Glasfasern, Glaskugeln, Glimmer, Wollastonit usw.) werden zur Verbesserung der Einarbeitbarkeit und der mechanischen Eigenschaften oft mit Silanen beschichtet (R. Fetsch und S. Wintergerst: Kunststoff-Journal 5 (1979) S. 10; B. Aldes: Chemtech 7 (1977) Heft 12 S. 766 - 79). Diese Silanbeschichtungen sind jedoch nur für saure Füllstoffe geeignet. Bei basischen Füllstoffen wie Erdalkalicarbonaten entsteht keine chemische Haftung der Silane zur

Füllstoffoberfläche (M.R. Rosen: Journal of Coatings Technology 50 (1978) Heft 644, S. 71; B.M. Vanderbilt und J.J. Jaruzelski: Ind. Eng. Chem. Prod. Res. Developm. 1 (1962) Heft 3 S. 188 - 94). Zudem wirkt die alkalische Oberfläche der basischen Füllstoffe wie Erdalkalicarbonate zerstörend auf die Silane.

Speziell gute Kupplungsreaktionen zwischen natürlichen und synthetischen Silikaten und Polymeren (z.B. Polyolefinen) werden mit Silanen erreicht, welche eine Sulfonylazidgruppe $R - SO_2N_3$ enthalten. Diese Gruppe kann direkt unter Abspaltung von Stickstoff eine chemische Bindung mit den Kohlenwasserstoffketten der Polymere eingehen (G.A. Mc Farren et al.: Polym. Eng. Sci. 17 (1977) Heft 1 S. 46 - 9; P.J. Orenski, J.G. Marsden: Soc. Plast. Eng. Tech. Pap. 22 (1976) S. 68 - 71). Entsprechende Azidosilane sind jedoch als Kupplungsmittel zwischen basischen Füllstoffen und Polymeren unwirksam, da Silane wie oben angegeben keine Chemosorption mit alkalischen Füllstoffoberflächen eingehen können.

Eine weitere reaktive Substanzklasse, welche eine direkte Kupplung mit Polymermolekülen ermöglicht, sind die Azidoformiate ($R - O\overset{O}{\overset{\|}{C}}N_3$) (D.S. Breslow et al: Journal Amer. Chem. Soc. 89 (1967) Heft 10 S. 2384 - 2390; K. Dawes et al.: Mater. Appl. 3 (1978) Heft 1 S. 23 - 6; Def. Publ. U.S. Pat. Off. T. 950, 008; U.S. 3, 971, 743; DE-OS 2 046 712). Auch hier gilt, daß die bisher publizierten Verbindungen keine Chemosorption mit basischen Füllstoffen und daher keine effektive chemische Kupplung zwischen Polymermolekülen und der Füllstoffoberfläche ergeben.

Eine Aufgabe der vorliegenden Erfindung ist es, Kupplungsmittel zwischen mineralischen Füllstoffen, insbesondere Calciumcarbonat einerseits und Polymeren andererseits zu schaffen, die zu einer effektiven Verstärkung des

Verbundwerkstoffes gegenüber den ungefüllten Polymeren führen, die eine Verbesserung der Zugfestigkeit gegenüber dem ungefüllten Kunststoff ergeben, ohne daß die Kerbschlagzähigkeit ungünstig verschlechtert wird, wobei gleichzeitig der Zug-E-Modul erhöht und die Reißdehnung vermindert wird, die weiterhin zu einer Erhöhung der Formbeständigkeit in der Wärme gegenüber dem gleichen unbehandelten Füllstoff führen und die zu einer verbesserten Ritzfestigkeit des gefüllten Polymeren führen.

Diese Aufgabe wird erfindungsgemäß durch Kupplungsmittel gelöst, die durch die allgemeine Formel

$$Y - R - X$$

gekennzeichnet sind, worin

X eine oder mehrere Säuregruppen oder deren Alkali- oder Erdalkali-salz(e),

Y eine oder mehrere reaktive Gruppen aus der Klasse der organischen Azide als Nitrenquelle und

R ein chemisches Verbindungsstück zwischen den beiden reaktiven Gruppen X und Y in Form eines aliphatischen und/oder olefinischen und/oder aromatischen Zwischenstücks mit 2 - 40 C-Atomen bedeuten.

Die erfindungsgemäßen Kupplungsmittel sind besonders gut für basische mineralische Füllstoffe geeignet. Unter basischen Füllstoffen sind natürliche Erdalkalicarbonate (Kreide, Kalkstein, Marmor) synthetische Calciumcarbonate, Dolomit, Calcium-Magnesiumcarbonate, natürlicher Magnesit, natürlicher Hydromagnesit, synthetisches basisches Magnesiumcarbonat, Magnesiumoxid Zindoxid oder andere Metalloxide oder -hydroxide wie z.B. Aluminiumtrioxid, Titandioxid usw. zu verstehen.

Die Einbringung der erfindungsgemäßen Kupplungsmittel kann auf verschiedene Weise erfolgen. So kann das Kupplungsmittel in einem Lösungsmittel gelöst und

dispergiert und so auf den Füllstoff aufgebracht werden. Das Lösungsmittel wird abdestilliert und der Rückstand getrocknet. Man kan den Füllstoff auch mit dem Haftvermittler in einem Mischer bei Raumtemperatur oder bei erhöhter Temperatur, wobei die Temperatur gegebenenfalls oberhalb des Schmelzpunktes des Haftvermittlers liegt, durchmischen.

Ist der Haftvermittler flüssig, kann er direkt oder mit einem geeigneten Lösungsmittel verdünnt zu dem Füllstoff in einem Schnellaufmischer getropft oder aus einer Zerstäubungstrocknungsvorrichtung in Form eines Nebels auf den Füllstoff gesprüht werden. Auf diese Weise können auch feste Haftvermittler in einem geeigneten Lösungsmittel gelöst auf den Füllstoff gebracht werden.

Alternativ kann der Haftvermittler in einem Mischer mit dem Füllstoff vermischt und anschließend das Polymer zugegeben werden. Es ist auch möglich, den Haftvermittler in einem Mischer mit dem Polymeren zu vermischen und anschließend den unbehandelten Füllstoff zuzufügen, oder es können alle drei Komponenten, nämlich das Polymere, der Füllstoff und der Haftvermittler, gleichzeitig vermischt werden. Dieses gleichzeitige Mischen kann in einem Vormischer jedoch auch direkt in der Verarbeitungsmaschine (Extruder, Spritzgußmaschine, Presse) erfolgen.

Vorzugsweise wird zunächst der Füllstoff mit dem Haftvermittler behandelt.

Die auf den Füllstoff aufgebrachte Kupplungsmittelmenge richtet sich nach der Oberfläche ($m^2/g$) desselben: Für eine optimale Haftvermittlung sollen möglichst alle verfügbaren oberflächlichen Formeleinheiten mit den Säuregurppen des Kupplungsmittel eine Chemosorption eingehen. Ein Überschuß an Kupplungsmittel haftet nicht auf

Füllstoffoberfläche und wirkt als Gleitmittel.

Die vorzugsweise Menge Kupplungsmittel liegt zwischen 0,5 und 5 Gewichtsprozent bezogen auf den Füllstoff.

Unter Polymeren sind insbesondere Thermoplaste, Elastomere und Duromere zu verstehen, welche mit den Sulfonylazid- oder Azidocarbonat-Gruppen chemisch eine Verbindung eingehen können.

Für die erfindungsgemäße Haftungsverbesserung eignen sich als Basispolymere 1-Olefin-Homo- und Copolymere, beispielsweise Polyethylen hoher Dichte, Polypropylen, Polybuten-1, Poly-(4-methyl)-penten-1, Olefincopolymerisate wie Ethylen-Propylen-Copolymerisate und Ethylen-Buten Copolymerisate. Eingeschlossen sind auch die übrigen thermoplastischen Kunststoffe und Elastomere, welche keine niedermolekularen Anteile enthalten, da diese bevorzugt mit den Sulfonylazid- resp. Azidoformiat-Gruppen reagieren und so die Kupplungsreaktionen mit den Makromolekülen verhindern.

Die erfindungsgemäßen Kupplungsmittel können in den Polymeren mit den üblichen, die Verarbeitung erleichternden und die physikalischen Eigenschaften verbessernden Zusatzstoffen vermischt werden. Als solche sind zu nennen Licht- und Wärmestabilisatoren, Antioxydantien, Antistatika, Farbpigmente usw.

Formteile, welche mit den erfindungsgemäßen Kupplungsmitteln beschichtete Füllstoffe enthalten, haben auch bei sehr hohen Füllgraden noch eine hohe Zugfestigkeit und Reißfestigkeit bei einer guten Schlagzähigkeit, ohne negative Auswirkungen auf die thermooxydative Stabilität.

Ein weiterer Vorteil der erfindungsgemäß zu verwendenden Haftvermittler besteht darin, daß die bei gefüllten Polyolefinen oft stark erniedrigte Ritzfestigkeit erhöht wird. Zudem wird die Formbeständigkeit in der Wärme durch die gewählten Kopplungsmittel gegenüber dem unbeschichteten Füllstoff erhöht.

Im folgenden werden vorzugsweise Ausführungsformen der Erfindung erläutert:

Vorzugsweise bedeutet der funktionelle Teil X eine oder mehrere Säuregruppen aus dem Bereich der -COOH, $-SO_3H$, $-OSO_3H$, $-PO_3H_2$, $-OPO_3H_2$-Verbindungen und/oder die Alkali- oder Erdalkali-salze dieser Säuren.

Vorzugsweise bedeutet der funktionelle Teil Y eine oder mehrere reaktive Azidosulfonyl oder Azidoformyl-Gruppen.

Vorzugsweise kann das Verbindungsstück R aus den Elementen Kohlenstoff und Wasserstoff sowie zusätzlich Sauerstoff, Stickstoff, Silicium und Schwefel bestehen.

Vorzugsweise ist das Kupplungsmittel eine Verbindung aus der Gruppe der Azidosulfonyl-carbonsäuren mit der allgemeinen Formel $N_3SO_2$-A-Z-B-COOH, wobei

A,B = aliphatische und/oder aromatische Reste mit jeweils 2 - 18 C-Atomen

Z = O, S, N

bedeuten.

Vorzugsweise ist das Kupplungsmittel eine Verbindung aus der Gruppe der Azidoformyl-carbonsäuren mit der allgemeinen Formel

$N_3$-CO-Z-A-Z-B-COOH, wobei

A,B = aliphatische und/oder aromatische Reste mit jeweils 2 - 18 C-Atomen und

Z = O, S, N

bedeuten.

Vorzugsweise ist das Kupplungsmittel eine Verbindung aus der Gruppe der Azidosulfonyl-carbonsäuren mit der allgemeinen Formel

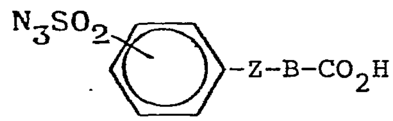

wobei

B = aliphatischer Rest mit 2 - 12 C-Atomen

Z = O, S, N

bedeuten.

Vorzugsweise ist das Kupplungsmittel eine Verbindung aus der Gruppe der Azidoformyl-oxycarbonsäuren mit der allgemeinen Formel

$$N_3CO-O-A-Z-B-COOH,$$

wobei

A,B = aliphatische Reste mit 2 - 12 C-Atomen

Z = O, S, N

bedeuten.

Vorzugsweise ist das Kupplungsmittel eine Verbindung aus der Gruppe der N-Azidoformyl-amino-carbonsäuren mit der allgemeinen Formel

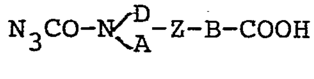,

wobei

A,B = aliphatische Reste mit 2 - 12 C-Atomen

D = aliphatische oder aromatische Reste mit 1 - 12 C-Atomen

Z = O, S, N

bedeuten oder A, D und N zusammen eine cycloaliphatische Gruppe bilden können.

Die Verknüpfung von A und B kann vorzugsweise über eine Estergruppe vorliegen. Vorzugsweise Kupplungsmittel sind diesbezüglich die in den Ansprüchen mit 1 und 2 gekennzeichneten Verbindungen.

Die Verknüpfung von A und B kann vorzugsweise auch über eine Amidgruppe vorliegen. Vorzugsweise Kupplungsmittel sind diesbezüglich die in den Ansprüchen mit 3, 4, 5, 6 und 7 gekennzeichneten Verbindungen.

Die Verknüpfung von A und B kann vorzugsweise auch über eine Urethangruppe vorliegen. Die vorzugsweisen Kupplungsmittel sind diesbezüglich die in den Ansprüchen mit 8 und 9 gekennzeichneten Verbindungen.

Die Verknüpfung von A und B kann vorzugsweise auch über eine Harnstoffgruppe vorliegen. Vorzugsweise Kupplungsmittel sind diesbezüglich die in den Ansprüchen mit 10 und 11 gekennzeichneten Verbindungen.

Die Verknüpfung von A und B kann vorzugsweise auch über eine Amidbindung vorliegen. Vorzugsweise Kupplungsmittel sind diesbezüglich die in den Ansprüchen mit 13 und 14 gekennzeichneten Verbindungen.

Neue Zwischenprodukte für die Herstellung vorstehender Kupplungsmittel sind die in den Ansprüchen mit 15, 16, 17, 18 und 19 gekennzeichneten Verbindungen.

Das erfindungsgemäße Verfahren zur Herstellung der erfindungsgemäßen Kupplungsmittel ist dadurch gekennzeichnet, daß stets R-X mit Y verknüpft wird, derart, daß eine organische säuregruppenhaltige Komponente mit

einer azidgruppenhaltigen Komponente durch eine Substitutions- oder Additions-Reaktion verknüpft wird.

Dabei wird vorzugsweise folgendermaßen verfahren, daß zunächst eine säuregruppenhaltige bifunktionelle organische Verbindung durch Substitutions- oder Additionsreaktion aufgebaut wird und dann ein reaktionsfähiges Halogen gegen den Azidrest ausgetauscht wird.

In anderer Weise kann erfindungsgemäß folgendermaßen verfahren werden, daß zunächst der Austausch eines Halogens gegen eine Azidgruppe an einer nichtsäuregruppenhaltigen Komponente erfolgt und dann die Verknüpfung mit einer säuregruppenhaltigen Komponente erfolgt.

Dabei kann vorzugsweise derart verfahren werden, daß zur Verlängerung des Verbindungsstücks R bis auf maximal 40 C-Atome ein Kupplungsmittel Y-R-X an der Säuregruppe X in an sich bekannter Weise aktiviert und mit einer säuregruppenhaltigen Komponente gekoppelt und dadurch verlängert wird.

Das erfindungsgemäße Verfahren zur Herstellung von Kupplungsmitteln gemäß dem anliegenden Anspruch 5 ist dadurch gekennzeichnet, daß entweder eine organische Chlorsulfonylcarbonsäure mittels eines überschüssigen Metallazids in eine Azidosulfonylcarbonsäure umgewandelt oder ein difunktionelles Sulfonylazid mit äquimolaren Mengen einer $\omega$-Amino, $\omega$-Hydroxy oder $\omega$-Mercaptocarbonsäure gekoppelt wird, so daß die Carboxyl- und Sulfonylazidgruppe unverändert bleiben.

Das erfindungsgemäße Verfahren zur Herstellung von Kupplungsmitteln gemäß den anliegenden Ansprüchen 6, 8 und 9 ist dadurch gekennzeichnet, daß entweder

eine Chlorformylcarbonsäure mittels überschüssigen Metallazids in eine Azidoformylcarbonsäure umgewandelt oder eine difunktionelle Azidoformylverbindung mit äquimolaren Mengen einer ω-Amino, ω-Hydroxy oder ω-Mercaptocarbonsäure so gekoppelt wird, daß Azidoformyl- und Carboxylgruppe unverändert bleiben.

Das erfindungsgemäße Verfahren zur Herstellung von Kupplungsmitteln gemäß dem anliegenden Anspruch 10 ist dadurch gekennzeichnet, daß ein ortho, meta oder para Chlorsulfonylbenzoylchlorid mit einer OH-Gruppe eines im 5 bis 20-fachen Überschusses eingesetzten Diols in Gegenwart eines HCl-Acceptors verestert und anschließend mittels eines Metall- oder Ammoniumazides in einen Azidosulfonylbenzoesäureester umgewandelt wird.

Das erfindungsgemäße Verfahren zur Herstellung von Kupplungsmitteln gemäß dem anliegenden Anspruch 13 ist dadurch gekennzeichnet, daß ein ortho, meta oder para Chlorsulfonylbenzoylchlorid entweder bei -10 bis +10°C mittels überschüssigen Natriumazids im Wasser/THF-Gemisch zum Azidosulfonylbenzoylazid umgesetzt und dann mit äquimolaren Mengen einer ω-Aminosäure zum entsprechenden Benzamid angesetzt wird, oder daß das Chlorsulfonylbenzoylchlorid mit den äquimolaren Mengen N,O-bissilyliester ω-Aminocarbonsäure bei -50 bis 0°C gekoppelt und anschließend mit überschüssiger Natriumazidlösung zum Sulfonylazid umgesetzt wird.

Das erfindungsgemäße Verfahren zur Herstellung von Kupplungsmitteln gemäß dem anliegenden Anspruch 19 ist dadurch gekennzeichnet, daß Zwischenprodukte des Typs <u>16</u> und <u>17</u> (Ansprüche 30 und 31) an der OH-Gruppe mit äquimolaren Mengen eines einseitig aktivierten Dicarbonsäurederivates oder mit einem Dicarbonsäurehydrid gekoppelt werden.

Das erfindungsgemäße Verfahren zur Herstellung von Kupplungsmitteln gemäß dem anliegenden Anspruch 22, ist dadurch gekennzeichent, daß ein ortho, meta- oder para- Chlorsulfonylphenylisocyanat bei Temperaturen unter 100°C mit Metallsalzen oder Silylestern von ω-Aminocarbonsäuren zum Harnstoff umgesetzt und die Carboxylgruppe mittels saurem Wasser anschließend freigesetzt wird.

Das erfindungsgemäße Verfahren zur Herstellung von Kupplungsmiteln gemäß dem anliegenden Anspruch 26 ist dadurch gekennzeichnet, daß äquimolare Mengen eines O-Azidoformyl-ω- hydroxycarbonsäurechlorids und eines N-Trimethylsilyl-ω-aminocarbonsäuretrimethylsilylesters in einem inerten Lösungsmittel bei -80 bis +10°C umgesetzt und nach Erwärmen auf Raumtemperatur durch Verrühren mit Wasser zur freien Carbonsäure hydrolysiert werden.

Die erfindungsgemäßen Verfahren zur Herstellung des Kupplungsmittels 1, 2, 3, 4, 5, 6, 7, 8, 9, 10, 11, 12, 13 und 14 sind in den anliegenden Patentansprüchen 45 bis 58 näher gekennzeichnet.

Die erfindungsgemäßen Verfahren zur Herstellung der Zwischenprodukte 15, 16, 17, 18 und 19 sind in den anliegenden Patentansprüchen 59 bis 63 näher gekennzeichnet.

Weitere Merkmale und Vorteile der Erfindung ergeben sich anhand der folgenden Beschreibung von Ausführungsbeispielen:

## Beispiel 1: Variation der Kupplungsmittel-Menge

Gemahlener, kristalliner Kalkstein mit einem mittleren Teilchendurchmesser von 3 Mikron und einer BET-Oberfläche (Brunauer, Emmet, Teller, U. Am. Chem. Soc. 60, S. 309) von 2,5 $m^2/g$ beschichtete man in einem schnellaufenden Mixer bei 120°C für 2 min mit 1 Gewichtsprozent eines Sulfonylazides der Formel:

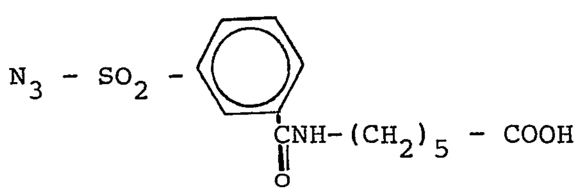

abgekürzt AZ-1.

Auf einem Laborwalzwerk mit zwei Walzen stellte man anschließend aus 60 % Gewichts-% pulverförmigem Homo-Polypropylen, abgekürzt: PP, (Dichte 0,905 $g/cm^3$ Schmelzindex 1,5 g/10 min bei 2 kg/230°C) und 40 Gewichts-% mit AZ-1 beschichtetem Calciumcarbonat bei einer Walzentemperatur von 195°C und einer Walzdauer von 5 min Walzfelle her. Diese wurden anschließend

während 2 min mit einer Kraft von 10 kN bei 190°C vorgepreßt und dann für 3 min bei 300 kN und 190°C zu Prüfplatten verpreßt.

Den Zugversuch führte man nach DIN 53 455, die Kerbschlagzähigkeitsprüfung nach DIN 53 43 und die Prüfung des E-Moduls nach DIN 53 457 durch.

In Tabelle 1 sind die Resultate der mechanischen Werte bei variablen Kupplungsmittelmengen zusammengestellt. Als Vergleich werden auch das gleiche nicht mit AZ-1 beschichtete Calciumcarbonat und das gleiche Calciumcarbonat beschichtet mit 1 % eines für den Einsatz von Calciumcarbonaten in Polypropylen empfohlenen Kupplungsmittels (Glyceryl-tris-acetoxyricinoleat) nach Literatur Belg. 878, 559; OS 2936510 angegeben. Diese Beschichtung trägt in den folgenden Tabellen die Bezeichnung "Beschichtung NL". Die Prozentangaben der Beschichtungsmittel sind immer Gewichtsprozente bezogen auf das Füllstoffgewicht.

Aus Tabelle 1 ist ersichtlich, daß je nach Oberfläche des Füllstoffes eine bestimmte Menge Beschichtungsmittel erforderlich ist, damit die Werte der Kerbschlagzähigkeit, der Zug- und Reißfestigkeit sowie des E-Moduls optimal ausfallen. Bei zu niedrigen Beschichtungsmengen tritt der Kopplungseffekt zwischen Füllstoff und Polymermolekülen wahrscheinlich durch Nebenreaktionen der Azide nicht auf. Zu hohe Mengen an Haftvermittler können mit den Säuregruppen nicht mehr auf dem basischen Füllstoff haften und wirken wie Gleitmittel (zunehmende Erniedrigung der Zug- und Reißfestigkeit sowie des E-Moduls).

Bei gleicher Beschichtungsmenge von 1 % zeigt AZ-1 eine

wesentlich bessere Kupplung als Beschichtung NL. Dies ist an den wesentlich höheren Werten der Zug- und Reißfestigkeit, der stark erniedrigten Reißdehnung und dem höheren E-Modul der Azidbeschichtung ersichtlich.

Beispiel 2 Variation der Verarbeitungstemperatur

Wird die in Beispiel 1 angegebene Herstellung der Prüfplatten aus 60 % Homo-Polypropylen und 40 % mit 1 % AZ-1 beschichtetem Calciumcarbonat bei verschiedenen Walztemperaturen und 5 min Walzzeit durchgeführt, so ist aus Tabelle 2 ersichtlich, daß das vorgeschlagene Kupplungsmittel in einem weiten Bereich der Verarbeitungstemperaturen wirksam ist. Das Vorpressen der Prüfplatten geschieht dabei bei den gleichen Bedingungen wie in Beispiel 1 angegeben. Der Einfluß der höheren Verarbeitungstemperatur auf die thermooxydative Schädigung des PP wurde dabei durch Zugabe von je 0,25 % Stabilisator Irganox 1010 (Ciba-Geigy) und Sandovor EPU (Sandoz) ausgeglichen.

Beispiel 3 Variation der Beschichtungstemperatur

Es ist nicht notwendig, die in Beispiel 1 angegebene Beschichtung des Füllstoffes durch Aufbringen des Kupplungsmittels im geschmolzenen Zustand und starken Scherkräften im Mixer durchzuführen. Wie in Tabelle 3 aufgeführt, kann der Füllstoff auch nur für 3 min bei Zimmertemperatur mit dem Kupplungsmittel gemischt und diese Mischung mit dem Polypropylen verarbeitet werden. Die mechanischen Werte fallen beim Kaltmischen nicht schlechter aus als bei Heißbeschichtung im Mixer.

Beispiel 4 Variation der Füllstoff-Feinheit

Wird anstelle des in Beispiel 1 bis 3 gewählten gemahlenen Kalksteins mit einem mittleren Teilchendurchmesser von 3 Mikron und einer BET-Oberfläche von 2,5 $m^2/g$ eine gröbere Type gleicher Herkunft (mittlerer Teilchendurchmesser 5 Mikron, BET-Oberfläche 0,9 $m^2/g$) oder eine feinere Qualität (mittlerer Teilchendurchmesser 1,5 Mikron, BET-Oberfläche 7 $m^2/g$) gewählt, so tritt die Kupplung zwischen der Füllstoffoberfläche und den Polypropylenmolekülen unabhängig von der Füllstoff-Feinheit ein. Die in Tabelle 4 aufgeführten Daten wurden an Prüfkörpern gemessen, welche nach dem in Beispiel 1 angegebenen Verfahren mit 1 % Beschichtungsmittel hergestellt wurden. Als Beschichtungsmittel wählte man hier das Kupplungsmittel AZ-2 mit der Strukturformel:

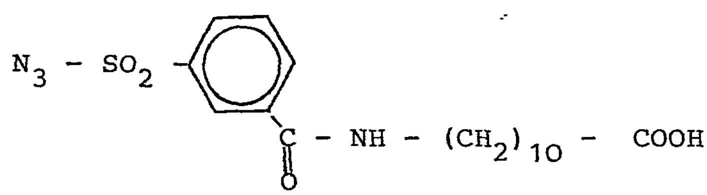

Beispiel 5 Variation der Füllstoffmenge

In den Beispielen 1 - 4 wurden immer Abmischungen aus 40 Gewichtsprozent Füllstoff und 60 % Homo-Polypropylen für die Versuche benützt. In Tabelle 5 sind Daten zusammengestellt, welche an Prüfkörpern mit 20, 40 und 60 Gewichts-% Füllstoff sowie 80, 60 und 40 Gewichts-% Homo-Polypropylen gemessen wurden. Es sollen dabei 1 % Beschichtung AZ-1 und NL mit unbeschichtetem Calciumcarbonat nach der Methode in Beispiel 1 verglichen werden.

Aus Tabelle 5 ist ersichtlich, daß die Sulfonylazide eine wesentlich bessere Kupplung zwischen Polymer und

Füllstoff ergeben als das Kupplungsmittel NL. Speziell die Zugfestigkeit fällt bis 60 % Füllstoff mit der Azidkupplung viel weniger schnell ab als mit dem unbeschichteten Füllstoff oder mit der Beschichtung NL. Es wird bei 60 % Calciumcarbonat praktisch noch die gleiche oder eine bessere Zugfestigkeit erreicht wie mit dem reinen Polypropylen. Die gute Kupplungsreaktion zeigt sich auch eindeutig bei der mit AZ-1 sehr hohen Reißfestigkeit und der stark verkürzten Reißdehnung.

Beispiel 6 Sulfonylazide als Kupplungsmittel in Polypropylen - Copolymeren (PPC)

Die Kopplungsversuche zwischen dem in Beispiel 1 beschriebenen Calciumcarbonat und PPC führte man mit einem PPC mit der Dichte 0,903 und einem Schmelzindex von 3,5 gemessen mit 2,16 kg bei 230°C durch. Die Beschichtung des Füllstoffes mit 1 % AZ-1 und die Herstellung der Prüfkörper erfolgte wie im Beispiel 1 angegeben.

Die Resultate in Tabelle 6 zeigen, daß die Sulfonylazid-Kopplung bis 70 % Füllstoff in PPC die gleich hohen oder besseren Zugfestigkeiten wie beim ungefüllten PPC ergibt. Der unbeschichtete Füllstoff oder die Beschichtung NL zeigen bei höheren Füllgraden wesentlich schlechtere Zugfestigkeit.

Die Kerbschlagzähigkeit fällt bei der Azidbeschichtung gleich gut aus wie mit der Beschichtung NL, welche bei hohen Füllgraden auch einen niedrigeren E-Modul (schlechtere Versteifungswirkung) als die Beschichtung AZ-1 ergibt. Es kann im Falle des Homo- und Copolymeren des PP von einer echten Verstärkungswirkung des

Calciumcarbonates gesprochen werden, wenn die erfindungsgemäßen Sulfonylazide mit Säuregruppen als Kupplungsmittel eingesetzt werden, da die Zugfestigkeit bei gewissen Füllgraden gegenüber dem ungefüllten Polymeren verbessert wird.

Beispiel 7 Sulfonylazide als Kupplungsmittel in Polyethylen hoher Dichte (HDPE)

Die Kopplung zwischen dem in Beispiel 1 beschriebenen Calciumcarbonat und HDPE wurde mit einem HDPE der Dichte 0,960 und einem Schmelzindex von 7 (2,16 kg/190°C) geprüft. Die Beschichtung mit AZ-2 und die Herstellung der Prüfkörper erfolgte wie im Beispiel 1 angegeben. Die Walzentemperaturen betrugen jedoch 160°C. Das Vorpressen der Prüfplatten erfolgte für 2 min bei 180°C unter 10 kN und das Pressen für 3 min bei 180°C unter 300 kN.

Die Daten in Tabelle 7 zeigen die wesentlich besseren mechanischen Eigenschaften der Azidkopplung gegenüber dem unbeschichteten Calciumcarbonat oder der Beschichtung NL. Die Zugfestigkeit liegt bis 70 % Füllstoff höher als beim ungefüllten HDPE, so daß auch hier wie beim Polypropylen von einer eigentlichen Verstärkungswirkung des Calciumcarbonates bei gelungener Kopplung gesprochen werden kann. Die Werte mit AZ-1 sind praktisch gleich gut.

Auch hier wird wie im PPC mit der Azidkupplung eine wesentlich höhere Kerbschlagzähigkeit und ein höherer E-Modul als mit dem unbeschichteten Füllstoff oder der Beschichtung NL erreicht.

Beispiel 8 Azidoformiate als Kopplungsmittel in Homo-Propylen

Wie in Beispiel 1 wurden Kalstein mit 1 % eines Azidoformiates der Formel:

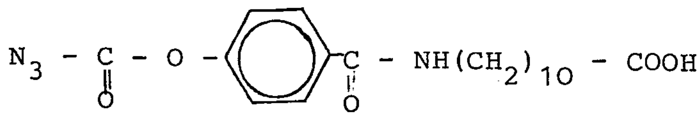

beschichtet und mit 40 Gewichts-% beschichtetem Calciumcarbonat und 60 % Polypropylen Prüfplatten hergestellt. Die Resultate sind in Tabelle 8 zusammengestellt.

Auch hier ist die Kopplungsreaktion zwischen Füllstoff und Polymer eindeutig aus der Verbesserung der Zugfestigkeit, der Reißdehnung und des E-Moduls gegenüber dem unbeschichteten Calciumcarbonat oder der Beschichtung NL ersichtlich.

Beispiel 9 Einfluß der Sulfonylazide auf die Formbeständigkeit in der Wärme von gefülltem Polypropylen

Tabelle 9 zeigt die Verbesserungen der Formbeständigkeiten in der Wärme, wenn eine Kopplung mit dem Sulfonylazid AZ-1 zwischen Calciumcarbonat und PP stattgefunden hat. Die Prüfungen führte man nach ISO/R 75 resp. DIN 53 461 durch. Die Probeherstellung erfolgte wie in Beispiel 1 angegeben. Das Sulfonylazid-Produkt ergibt ab einem Füllgrad von 40 % gegenüber dem unbeschichteten Calciumcarbonat eine beträchtliche Verbesserung der Formbeständigkeit in der Wärme.

Beispiel 10 Einfluß der Sulfonylazide auf die Ritzfestigkeit von gefülltem Homo-Polypropylen

Die nach Beispiel 1 hergestellten Prüfkörper aus 40 % Füllstoff und 60 % Homo-Polypropylen prüfte man mit dem Gerät Erichsen Typ 239 nach Clemen mit 4 mm starken Preßplatten auf die Ritzfestigkeit. Die in Tabelle 10 angegebenen Werte zeigen, daß die Sulfonylazidkopplung eine wesentliche Verbesserung der Ritzfestigkeit von Polypropylen gefüllt mit Calciumcarbonat ergibt. Es wird wieder die gleiche Ritzfestiqkeit wie beim ungefüllten Polypropylen erreicht. Beschichtung NL ergibt eine wesentliche niedrigere Ritzfestigkeit.

| 60 % Homo-PP<br>40 % $CaCO_3$ | Kerbschlag-<br>zähigkeit 23°C<br>$mJ/mm^2$ | ± | Zugfestigkeit<br>$N/mm^2$ | ± | Dehnung bei<br>Höchstkraft<br>% | ± | Reißfestigkeit<br>$N/mm^2$ | ± | Reißdehnung<br>% | ± | Zug-E-Modul<br>$N/mm^2$ | ± |
|---|---|---|---|---|---|---|---|---|---|---|---|---|
| PP ohne Füllstoff | 3,7 | 0,5 | 29,3 | 1,1 | 14,8 | 0 | 29.3 | 0,4 | 957 | 60 | 1018 | 56 |
| $CaCO_3$ unbeschichtet | 3,4 | 0,1 | 18,8 | 0,6 | 7,2 | 0,5 | 17,5 | 2,8 | 555 | 143 | 1681 | 146 |
| $CaCO_3$ mit 0,5 % AZ 1 | 2,0 | 0,2 | 24,2 | 0,5 | 3,5 | 0,5 | 16,8 | 0,3 | 221 | 114 | 1933 | 253 |
| $CaCO_3$ mit 1,0 % AZ 1 | 2,6 | 0,1 | 34,2 | 0,9 | 9,3 | 1,1 | 34,2 | 0,9 | 19 | 2 | 2072 | 179 |
| $CaCO_3$ mit 1,25% AZ 1 | 1,9 | 0,3 | 30,0 | 0,7 | 8,6 | 0 | 30,0 | 0,7 | 18 | 3 | 1842 | 82 |
| $CaCO_3$ mit 1,5 % AZ 1 | 1,7 | 0,1 | 29,6 | 1,3 | 8,6 | 0 | 29,6 | 1,3 | 16 | 1 | 1643 | 128 |
| $CaCO_3$ mit 2,0 % AZ 1 | 1,9 | 0,3 | 27,9 | 0,7 | 7,0 | 1,3 | 27,9 | 0,7 | 10 | 2,4 | 1606 | 123 |
| $CaCO_3$ 1 % NL | 3,6 | 0,4 | 20,9 | 0,6 | 3,7 | 0 | 18,6 | 0,6 | 624 | 42 | 1677 | 182 |

Tabelle 1

Tabelle 2

| 60 % Homo-PP<br>40 % $CaCO_3$ mit<br>1 % AZ-1 | | Zugfestigkeit | | Reissdehnung | | Zug-E-Modul | | |
|---|---|---|---|---|---|---|---|---|
| | | $N/mm^2$ | ± | % | ± | $N/mm^2$ | ± | |
| Walzen | $170^oC$ | 29,4 | 0,5 | 16,1 | 4,3 | 2058 | 183 | |
| | $195^oC$ | 29,0 | 0,2 | 16,8 | 4,1 | 1970 | 100 | |
| | $210^oC$ | 29,1 | 0,3 | 25,2 | 4,7 | 1987 | 166 | |
| | $235^oC$ | 28,2 | 0,3 | 18,8 | 2,8 | 1927 | 181 | |

Tabelle 3

| 60 % Homo-PP<br>40 % $CaCO_3$ | Kerbschlag-zähigkeit 23°C<br>$mJ/mm^2$ | ± | Zugfestigkeit<br>$N/mm^2$ | ± | Dehnung bei Höchstkraft<br>% | ± | Reißfestigkeit<br>$N/mm^2$ | ± | Reißdehnung<br>% | ± | Zug-E-Modul<br>$N/mm^2$ | ± |
|---|---|---|---|---|---|---|---|---|---|---|---|---|
| a) Heißmischung<br>$CaCO_3$ + 1 % AZ-1 | 2,2 | 0,3 | 31,0 | 0,1 | 7,4 | 0 | 31,0 | 0,1 | 15,6 | 2,6 | 1986 | 279 |
| b) Kaltmischung<br>$CaCO_3$ + 1 % AZ-1 | 2,0 | 0,2 | 30,0 | 0,3 | 7,4 | 0 | 30,0 | 0,4 | 15,2 | 3,4 | 1868 | 208 |

Tabelle 4

| 60 % Homo-PP<br>40 % $CaCO_3$ | Kerbschlag-zähigkeit 23°C<br>$mJ/mm^2$ | ± | Zugfestigkeit<br>$N/mm^2$ | ± | Dehnung bei Höchstkraft<br>% | ± | Bruchenergie<br>J | ± | Reißdehnung<br>% | ± | Zug-E-Modul<br>$N/mm^2$ | ± |
|---|---|---|---|---|---|---|---|---|---|---|---|---|
| a) $CaCO_3$ 5 Mikron unbeschichtet | 2,6 | 0,1 | 20,6 | 0,2 | 5,1 | 0,5 | 22,5 | 8,8 | 313 | 124 | 1664 | 68 |
| beschichtet 1 % AZ-2 | 2,0 | 0,3 | 28,0 | 1,4 | 4,9 | 0,9 | 0,8 | 0,3 | 8,5 | 2,6 | 1883 | 87 |
| b) $CaCO_3$ 3 Mikron unbeschichtet | 2,9 | 0,2 | 21,7 | 0,3 | 4,9 | 0,6 | 11,7 | 1,1 | 157 | 54 | 2023 | 218 |
| beschichtet 1 % AZ-2 | 3,1 | 0,2 | 31,5 | 1,1 | 6,4 | 0,6 | 1,8 | 0,6 | 15,1 | 5,1 | 1850 | 87 |
| c) $CaCO_3$ 1,5 Mikron unbeschichtet | 2,7 | 0,2 | 22,4 | 0,5 | 2,9 | 0,3 | 2,7 | 1,0 | 37,8 | 14,3 | 2297 | 102 |
| beschichtet 1 % AZ-2 | 2,9 | 0,1 | 32,6 | 1,0 | 6,0 | 0,3 | 1,2 | 0,1 | 10,8 | 1,1 | 2169 | 126 |

Tabelle 5

| Mischung | Kerbschlag-zähigkeit 23°C mJ/mm² | ± | Zugfestigkeit N/mm² | ± | Dehnung bei Höchstkraft % | ± | Reißfestigkeit N/mm² | ± | Reißdehnung % | ± | Zug-E-Modul N/mm² | ± |
|---|---|---|---|---|---|---|---|---|---|---|---|---|
| a) $CaCO_3$ Mikron unbeschichtet | | | | | | | | | | | | |
| 20 % Füllstoff | 4,2 | 0,3 | 25,7 | 0,4 | 10,9 | 0,5 | 23,1 | 4,5 | 753 | 139 | 1458 | 154 |
| 40 % " | 3,3 | 0,2 | 20,4 | 0,6 | 7,6 | 0,5 | 16,6 | 0,4 | 321 | 140 | 1842 | 59 |
| 60 % " | 1,9 | 0,2 | 16,1 | 0,6 | 3,7 | 0 | 12,8 | 0,6 | 104 | 88 | 2815 | 195 |
| b) beschichtet mit 1 % AZ-1 | | | | | | | | | | | | |
| 20 % Füllstoff | 2,6 | 0,3 | 28,3 | 0,5 | 10,7 | 0,6 | 21,4 | 1,9 | 718 | 188 | 1583 | 88 |
| 40 % " | 2,2 | 0,3 | 31,0 | 0,1 | 7,4 | 0 | 31,0 | 0,1 | 15,6 | 2,6 | 1986 | 279 |
| 60 % " | 1,7 | 0,2 | 25,2 | 3,9 | 4,2 | 0,7 | 25,2 | 3,9 | 6,9 | 1,1 | 3078 | 166 |
| c) beschichtet mit 1 % NL | | | | | | | | | | | | |
| 20 % Füllstoff | 4,0 | 0,2 | 25,7 | 0,5 | 11,1 | 0 | 24,5 | 5,1 | 769 | 226 | 1475 | 176 |
| 40 % " | 3,4 | 0,2 | 19,7 | 0,7 | 8,6 | 0 | 18,7 | 0,8 | 666 | 40 | 1751 | 215 |
| 60 % " | 2,9 | 0,2 | 13,7 | 0,4 | 4,5 | 0,6 | 1,30 | 0,4 | 211 | 79 | 2972 | 125 |
| Homo-PP ungefüllt | 3,7 | 0,5 | 29,3 | 1,1 | 14,8 | 0 | 29,3 | 0,4 | 957 | 60 | 1018 | 56 |

Tabelle 6

| Mischung | Kerbschlag-zähigkeit 23°C | | Zugfestigkeit | | Dehnung bei Höchstkraft | | Bruchenergie | | Reißdehnung | | Zug-E-Modul | |
|---|---|---|---|---|---|---|---|---|---|---|---|---|
| | $mJ/mm^2$ | ± | $N/mm^2$ | ± | % | ± | J | ± | %. | ± | $N/mm^2$ | ± |
| a) $CaCO_3$ 3 Mikron unbeschichtet | | | | | | | | | | | | |
| 20 % Füllstoff | 8,0 | 0,7 | 21,4 | 0,2 | 5,2 | 0,8 | 10,2 | 3,1 | 144 | 45 | 1347 | 106 |
| 40 % " | 2,4 | 0,3 | 18,2 | 0,7 | 2,8 | 0,5 | 6,5 | 4,5 | 100 | 74 | 1928 | 138 |
| 60 % " | 1,2 | 0,1 | 13,8 | 0,2 | 1,5 | 0,1 | 0,2 | 0,05 | 4,5 | 0,7 | 2735 | 414 |
| 70 % " | 1,3 | 0,2 | 10,5 | 1,2 | 0,9 | 0,4 | 0,03 | 0,01 | 1,2 | 0,4 | 4221 | 329 |
| b) beschichtet mit 1 % AZ-1 | | | | | | | | | | | | |
| 20 % Füllstoff | 7,3 | 0,5 | 26,2 | 0,7 | 5,7 | 0,6 | 2,4 | 0,5 | 27 | 5,4 | 1317 | 97 |
| 40 % " | 4,6 | 0,4 | 27,1 | 0,3 | 4,3 | 0,4 | 1,5 | 0,3 | 16 | 3,6 | 1951 | 231 |
| 60 % " | 3,4 | 0,3 | 27,9 | 0,7 | 3,3 | 0,5 | 0,5 | 0,06 | 5,4 | 0,5 | 2733 | 358 |
| 70 % " | 3,0 | 0,2 | 26,2 | 1,3 | 2,0 | 0,17 | 0,17 | 0,02 | 2,4 | 0,2 | 4472 | 224 |
| c) beschichtet mit 1 % NL | | | | | | | | | | | | |
| 20 % Füllstoff | 8,3 | 0,5 | 21,0 | 0,3 | 4,7 | 0,4 | 6,0 | 3,3 | 86 | 48 | 1300 | 99 |
| 40 % Füllstoff | 4,1 | 0,2 | 18,4 | 0,2 | 3,6 | 0,8 | 5,2 | 1,6 | 75 | 22 | 1807 | 102 |
| 60 % Füllstoff | 3,8 | 0,3 | 13,0 | 0,5 | 1,9 | 0,6 | 2,3 | 1,2 | 46 | 27 | 2371 | 286 |
| 70 Füllstoff | 2,9 | 0,3 | 10,7 | 0,3 | 1,8 | 0,6 | 0,2 | 0,06 | 5,1 | 1,2 | 3256 | 153 |
| PP-Copolymer ungefüllt | 9,1 | 0,8 | 26,1 | 0,9 | 7,5 | 0,3 | 40,9 | 14,3 | 588 | 201 | 1046 | 176 |

Tabelle 7

| Mischung | Kerbschlag-zähigkeit 23°C $mJ/mm^2$ | ± | Zugfestigkeit $N/mm^2$ | ± | Dehnung bei Höchstkraft % | ± | Bruchenergie J | ± | Reißdehnung % | ± | Zug-E-Modul $N/mm^2$ | ± |
|---|---|---|---|---|---|---|---|---|---|---|---|---|
| a) $CaCO_3$ 3 Mikron unbeschichtet | | | | | | | | | | | | |
| 20 % Füllstoff | 3,1 | 0,2 | 25,4 | 0,8 | 5,8 | 0,7 | 2,20 | 0,8 | 35,7 | 12,9 | 1258 | 161 |
| 40 % " | 2,3 | 0,1 | 23,0 | 0,4 | 3,1 | 0,7 | 0,30 | 0,1 | 4,2 | 0,8 | 1472 | 148 |
| 60 % " | 1,2 | 0,1 | 11,0 | 1,6 | 1,1 | 0,4 | 0,03 | 0,004 | 1,4 | 0,4 | 2854 | 596 |
| 70 % " | 1,3 | 0,1 | 8,7 | 2,1 | 0,6 | 0,1 | 0,02 | 0,007 | 0,8 | 0,2 | 4294 | 915 |
| b) beschichtet mit 1 % AZ-2 | | | | | | | | | | | | |
| 20 % Füllstoff | 3,7 | 0,6 | 28,3 | 1,2 | 7,6 | 0,7 | 4,10 | 2,2 | 69,5 | 43,6 | 1227 | 56 |
| 40 % " | 3,9 | 0,1 | 28,3 | 0,5 | 5,8 | 0,4 | 1,50 | 0,2 | 15,8 | 2,0 | 1418 | 99 |
| 60 % " | 4,1 | 0,1 | 28,2 | 1,8 | 3,3 | 0,6 | 0,30 | 0,1 | 3,7 | 0,6 | 3018 | 227 |
| 70 % " | 4,8 | 0,1 | 25,0 | 6,1 | 2,0 | 0,7 | 0,16 | 0,09 | 2,4 | 0,8 | 5143 | 1079 |
| c) beschichtet mit 1 % NL | | | | | | | | | | | | |
| 20 % Füllstoff | 3,2 | 0,2 | 24,2 | 1,1 | 8,0 | 2,4 | 4,90 | 3,1 | 91,7 | 61,3 | 1232 | 102 |
| 40 % Füllstoff | 2,8 | 0,1 | 18,9 | 0,6 | 4,0 | 0,5 | 0.90 | 0,3 | 14,5 | 4,5 | 1367 | 105 |
| 60 % Füllstoff | 1,9 | 0,4 | 12,1 | 0,6 | 1,6 | 0,4 | 0,06 | 0,01 | 2,0 | 0,5 | 2473 | 220 |
| 70 Füllstoff | 1,9 | 0,2 | 7,0 | 0,2 | 0,5 | 0,03 | 0,01 | 0 | 0,7 | 0,04 | 2821 | 928 |
| HDPE ungefüllt | 5,8 | 0,5 | 23,9 | 1,5 | 7,6 | 1,0 | 12,0 | 4,7 | 324,0 | 118 | 953 | 54 |

Tabelle 8

| 60 % Homo-PP<br>40 % $CaCO_3$ | Kerbschlag-zähigkeit 23°C<br>mJ/mm² | ± | Zugfestigkeit<br>N/mm² | ± | Dehnung bei Höchstkraft<br>% | ± | Bruchenergie<br>J | ± | Reißdehnung<br>% | ± | Zug-E-Modul<br>N/mm² | ± |
|---|---|---|---|---|---|---|---|---|---|---|---|---|
| $CaCO_3$ unbeschichtet | 2,9 | 0,2 | 21,7 | 0,3 | 4,9 | 0,6 | 11,7 | 3,2 | 157 | 38 | 2023 | 218 |
| Beschichtung NL | 3,8 | 0,3 | 21,8 | 0,4 | 4,9 | 0,5 | 18,4 | 4,0 | 241 | 54 | 2031 | 199 |
| Beschichtung) Azidoformiat) | 2,8 | 0,2 | 32,6 | 0,7 | 6,0 | 0,5 | 1,9 | 0,5 | 13,6 | 3,3 | 2467 | 311 |

Tabelle 9

| Mischung | Formbeständigkeit in der Wärme $F_{ISO}$ |
|---|---|
| a) Calciumcarbonat unbeschichtet | |
| 20 % $CaCO_3$ | A 61 °C |
| 40 % $CaCO_3$ | A 62 °C |
| 60 % $CaCO_3$ | A 74 °C |
| b) beschichtet mit 1 % AZ-1 | |
| 20 % $CaCO_3$ | A 61 °C |
| 40 % $CaCO_3$ | A 63 °C |
| 60 % $CaCO_3$ | A 83 °C |

0154811

Tabelle 10 Ritzfestigkeit

| 60 % Homo-PP<br>40 % Füllstoff | Belastung der Nadel bis zur Ritzung des Untergrundes in g |
|---|---|
| Calciumcarbonat 3 Mikron | 90 |
| beschichtet mit 1 % NL | 70 |
| " " 1 % AZ-1 | 120 |
| Microtalcum | 60 |
| Polypropylen ungefüllt | 120 |

Es läßt sich feststellen, daß mineralische Füllstoffe, insbesondere Calciumcarbonat, beschichtet mit den Beschichtungsmitteln nach dem Stande der Technik, (Stearinsäure, Ester wie NL) in Polymeren schlechtere Eigenschaften erreichen als mit den erfindungsgemäßen Kupplungsmitteln. Insbesondere werden gemäß der Erfindung höhere Festigkeiten erreicht. Dies betrifft insbesondere Zug- und Reißfestigkeit, Formbeständigkeit in der Wärme bei hohen Füllgraden und die für den Einsatz in der Automobilindustrie wichtige Oberflächenhärte (Ritzhärte) von mit mineralischen Füllstoffen, insbesondere Calciumcarbonat gefüllten Polymeren, insbesondere PP-Platten.

Im folgenden werden erfindungsgemäße, vorzugsweise Ausführungsformen (im folgenden AF abgekürzt) der Erfindung im einzelnen offenbart:

1) Kupplungsmittel,
dadurch gekennzeichnet, daß es eine Verbindung aus der Gruppe der Azidosulfonyl-carbonsäuren mit der allgemeinen Formel $N_3SO_2$-A-Z-B-COOH ist, wobei
A, B = aliphatische und/oder aromatische Reste mit jeweils 2 - 18 C-Atomen
Z = O, S, N
bedeuten.

2) Kupplungsmittel, dadurch gekennzeichnet, daß es eine Verbindung aus der Gruppe der Azidoformyl-carbonsäuren mit der allgemeinen Formel $N_3$-CO-Z-A-Z-B-COOH ist, wobei
A,B = aliphatische und/oder aromatische Reste mit jeweils 2 - 18 C-Atomen und
Z = O, S, N
bedeuten.

3) Kupplungsmittel nach AF 1, dadurch gekennzeichnet, daß es eine Verbindung aus der Gruppe der Azidosulfonyl-carbonsäuren mit der allgemeinen Formel

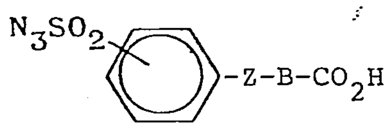

ist, wobei
B = aliphatischer Rest mit 2 - 12 C-Atomen
Z = O, S, N
bedeuten.

4) Kupplungsmittel nach AF 2, dadurch gekennzeichnet, daß es eine Verbindung aus der Gruppe der Azidoformyl-oxycarbonsäuren mit der allgemeinen Formel

$$N_3CO\text{-}O\text{-}A\text{-}Z\text{-}B\text{-}COOH$$

ist, wobei
A, B = aliphatische Reste mit 2 - 12 C-Atomen
Z = O, S, N
bedeuten.

5) Kupplungsmittel dadurch gekennzeichnet, daß es eine Verbindung aus der Gruppe der N-Azidoformyl-aminocarbonsäuren mit der allgemeinen Formel

$$N_3CO-N\begin{matrix}\nearrow D \\ \searrow A-Z-B-COOH\end{matrix}$$

ist, wobei

A, B = aliphatische Reste mit 2 - 12 C-Atomen

D = aliphatische oder aromatische Reste mit 1 - 12 C-Atomen

Z = O, S, N

bedeuten oder A, D und N zusammen eine cycloaliphatische Gruppe bilden können.

6) Kupplungsmittel nach AF 1 und 3, dadurch gekennzeichnet, daß die Verknüpfung von A und B über eine Estergruppe vorliegt.

7) Kupplungsmittel nach AF 1, 3 und 6, gekennzeichnet durch die Verbindung

1 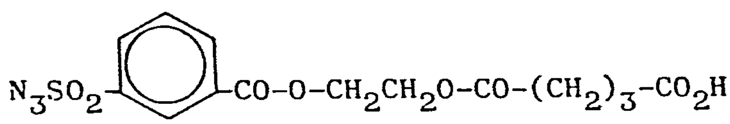

8) Kupplungsmittel nach AF 1, 3 und 6, gekennzeichnet durch die Formel

2 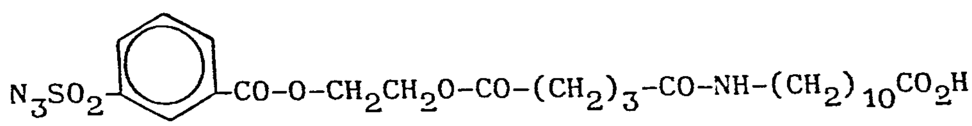

9) Kupplungsmittel nach AF 1 und 3, dadurch gekennzeichnet, daß die Verknüpfung von A und B über eine Amidgruppe vorliegt.

10) Kupplungsmittel nach AF 1, 3 und 9, gekennzeichnet durch die Verbindung

3 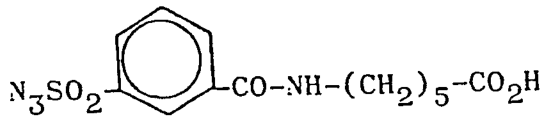

11) Kupplungsmittel nach AF 1, 3 und 9, gekennzeichnet durch die Verbindung

4 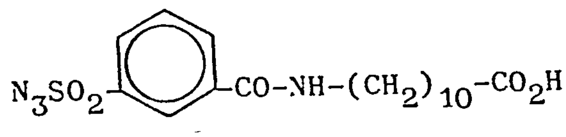

12) Kupplungsmittel nach AF 1, 3 und 9 , gekennzeichnet durch die Verbindung

5 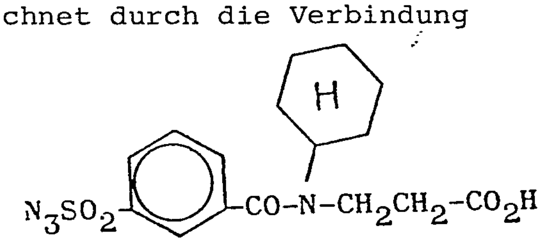

13) Kupplungsmittel nach AF 1, 3 und 9 , gekennzeichnet durch die Verbindung

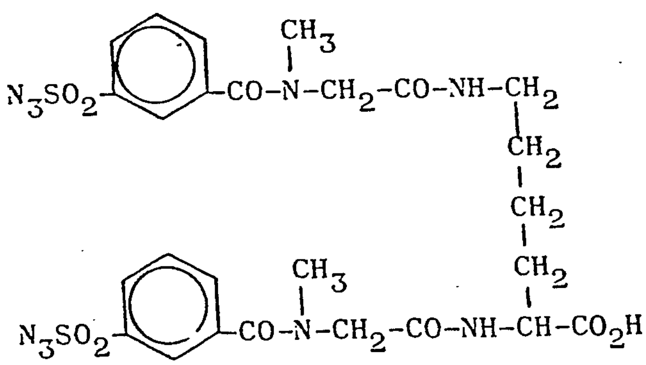 6

14) Kupplungsmittel nach AF 1 und 9, gekennzeichnet durch die Verbindung

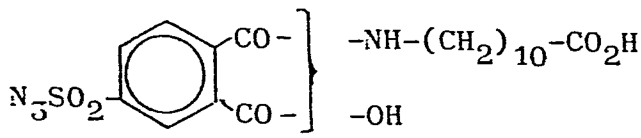

7

15) Kupplungsmittel nach AF 1, dadurch gekennzeichnet, daß die Verknüpfung von A und B über eine Urethangruppe vorliegt.

16) Kupplungsmittel nach AF 1 und 15, gekennzeichnet durch die Verbindung

8

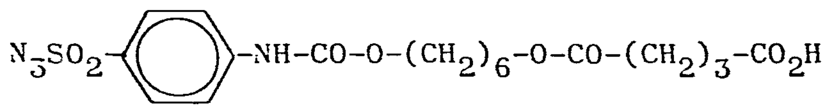

17) Kupplungsmittel nach AF 1 und 15, gekennzeichnet durch die Verbindung

9

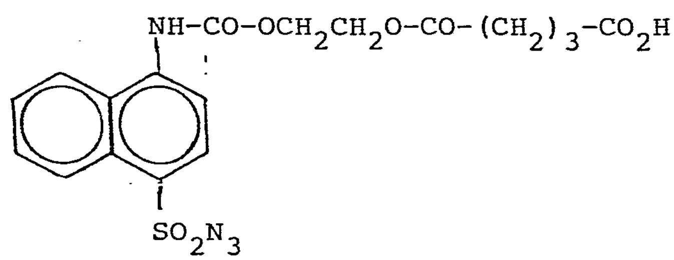

18) Kupplungsmittel nach AF 1, dadurch gekennzeichnet, daß die Verknüpfung von A und B über eine Harnstoffgruppe vorliegt.

19) Kupplungsmittel nach AF 1 und 18, gekennzeichnet durch die Verbindung

10 $N_3SO_2-NH-CO-NH-(CH_2)_{10}-CO_2H$

20) Kupplungsmittel nach AF 1 und 18, gekennzeichnet durch die Verbindung

11 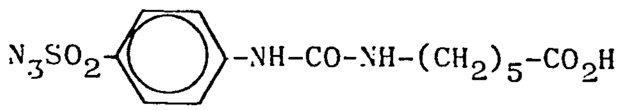

21) Kupplungsmittel nach AF 6, gekennzeichnet durch die Verbindung

12 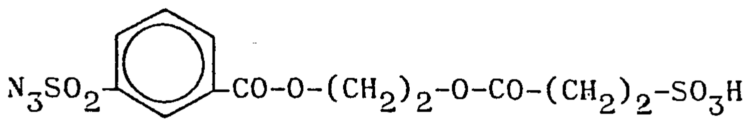

22) Kupplungsmittel nach AF 4 und 5 , dadurch gekennzeichnet daß, die Verknüpfung von A und B über eine Amidbindung vorliegt.

23) Kupplungsmittel nach AF 4 und 22, gekennzeichnet durch die Verbindung

13 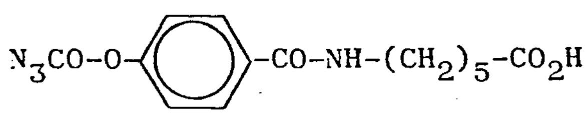

24) Kupplungsmittel nach AF 5 und 22, gekennzeichnet durch die Verbindung

14 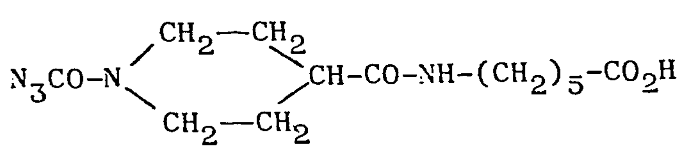

25) 1,2-Äthandiol-(3-azidosulfonyl-)monobenzoat der Formel

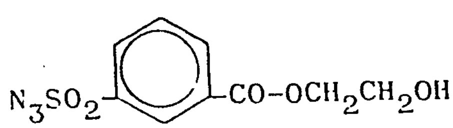 15

26) N-(4-Azidosulfonyl-phenyl)-O-(6-hydroxy-hexyl)-urethan der Formel

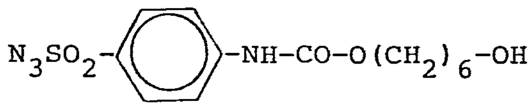

16

27) N-(4-Azidosulfonyl-naphthyl)-O-(2-hydroxy -äthyl)-urethan der Formel

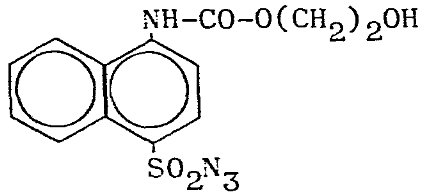

17

28) 1-Chlorformyl-piperidin-4-carbonsäurechlorid der Formel

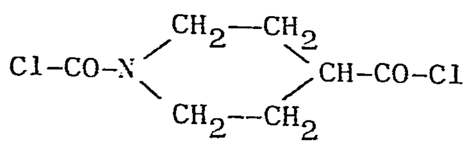

18

29) N-(3-Azidosulfonyl-benzoyl)-sarkosin der Formel

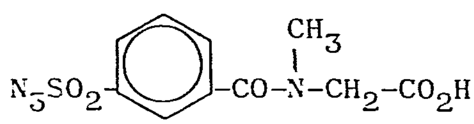

19

30) Verfahren zur Herstellung der Kupplungsmittel nach AF 1 - 24,
dadurch gekennzeichnet, daß stets R-X mit Y verknüpft wird, derart, daß eine organische säuregruppenhaltige Komponente mit einer azidgruppenhaltigen Komponente durch eine Substitutions- oder Additions-Reaktion verknüpft wird.

31) Verfahren nach AF 30,
dadurch gekennzeichnet, daß zunächst eine säuregruppenhaltige bifunktionelle organische Verbindung durch Substitutions- oder Additionsreaktion aufgebaut wird und dann ein reaktionsfähiges Halogen gegen den Azidrest ausgetauscht wird.

32) Verfahren nach AF 30,
dadurch gekennzeichnet, daß zunächst der Austausch eines Halogens gegen eine Azidgruppe an einer nichtsäuregruppenhaltigen Komponente erfolgt und dann die Verküpfung mit einer säuregruppenhaltigen Komponente erfolgt.

33) Verfahren nach AF 30 - 32,
dadurch gekennzeichnet, daß zur Verlängerung des Verbindungsstücks R bis auf maximal 40 C-Atome ein Kupplungsmittel Y-R-X an der Säuregruppe X in an sich bekannter Weise aktiviert und mit einer säuregruppenhaltigen Komponente gekoppelt und dadurch verlängert wird.

34) Verfahren zur Herstellung von Kupplungsmitteln nach AF 1, dadurch gekennzeichnet, daß entweder eine organische Chlorsulfonylcarbonsäure mittels eines überschüssigen Metallazids in eine Azidosulfonylcarbonsäure umgewandelt oder ein difunktionelles Sulfonylazid mit äquimolaren Mengen einer ω-Amino, ω-Hydroxy oder ω-Mercaptocarbonsäure gekoppelt wird, so daß die Carboxyl- und Sulfonylazidgruppe unverändert bleiben.

35) Verfahren zur Herstellung von Kupplungsmitteln nach AF 2, 4 und 5, dadurch gekennzeichnet, daß entweder eine Chlorformylcarbonsäure mittels überschüssigen Metallazids in eine Azidoformylcarbonsäure umgewandelt oder eine difunktionelle Azidoformylverbindung mit äquimolaren Mengen einer ω-Amino, ω-Hydroxy oder ω-Mercaptocarbonsäure so gekoppelt wird, daß Azidoformyl- und Carboxylgruppe unverändert bleiben.

36) Verfahren zur Herstellung von Kupplungsmitteln nach AF 6, dadurch gekennzeichnet, daß ein ortho, meta oder para Chlorsulfonylbenzoylchlorid mit einer OH Gruppe eines im 5-20-fachen Überschusses eingesetzten Diols in Gegenwart eines HCl-Acceptors verestert und anschließend mittels eines Metall- oder Ammoniumazides in einen Azidosulfonylbenzoesäureester umgewandelt wird.

37) Verfahren zur Herstellung von Kupplungsmitteln nach AF 9, dadurch gekennzeichnet, daß ein ortho, meta oder

para Chlorsulfonylbenzoylchlorid entweder bei -10 bis +10°C mittels überschüssigen Natriumazids im Wasser/THF-Gemisch zum Azidosulfonylbenzoylazid umgesetzt und dann mit äquimolaren Mengen einer ω-Aminosäure zum entsprechenden Benzamid angesetzt wird, oder daß das Chlorsulfonylbenzoylchlorid mit den äquimolaren Mengen N,O-bissilyliester ω-Aminocarbonsäure bei -50 bis 0°C gekoppelt und anschließend mit überschüssiger Natriumazidlösung zum Sulfonylazid umgesetzt wird.

38) Verfahren zur Herstellung von Kupplungsmitteln nach AF 15, dadurch gekennzeichnet, daß Zwischenprodukte des Typs 16 und 17 (Ansprüche 30 und 31) an der OH-Gruppe mit äquimolaren Mengen eines einseitig aktivierten Dicarbonsäurederivates oder mit einem Dicarbonsäurehydrid gekoppelt werden.

39) Verfahren zur Herstellung von Kupplungsmitteln nach AF 18, dadurch gekennzeichnet, daß ein ortho-, meta- oder para- Chlorsulfonylphenylisocyanat bei Temperaturen unter 100°C mit Metallsalzen oder Silylestern von ω-Aminocarbonsäuren zum Harnstoff umgesetzt und die Carboxylgruppe mittels saurem Waser anschließend freigesetzt wird.

40) Verfahren zur Herstellung von Kupplungsmitteln nach AF 22, dadurch gekennzeichnet, daß äquimolare Mengen eines O-Azidoformyl-ω-hydroxycarbonsäurechlorids und eines N-Trimethylsilyl-ω-aminocarbonsäuretrimethylsilylesters in einem inerten Lösungsmittel bei -80 bis +10°C umgesetzt und nach Erwärmen auf Raumtemperatur durch Verrühren mit Wasser zur freien Carbonsäure hydrolysiert werden.

41) Verfahren zur Herstellung des Kupplungsmittels 1 nach AF 7,
dadurch gekennzeichnet, daß der Alkohol 15 mit äquimolaren Mengen Glutarsäureanhydrid und Triäthylamin in einem inerten trockenen Lösungsmittel bei 0 - 100°C verestert und danach das tertiäre Amin durch Waschen mit einer wässrigen Säure mittels eines Jonenaustauschers entfernt wird.

42) Verfahren zur Herstellung des Kupplungsmittels 2 nach AF 8,
dadurch gekennzeichnet, daß das Kupplungsmittel 1 mit überschüssigem, reinem Thionylchlorid in siedendem Chloroform in das Carbonsäurechlorid übergeführt, das restliche Thionylchlorid unter mehrfacher Zugabe von Toluol i. Vak. abdestilliert, das verbleibende Säurechlorid bei 0°C zur Lösung von N,O-bis-silyliester-11-aminoundecansäure in Methylenchlorid getropft und die Silylestergruppe anschließend durch Waschen mit Eiswasser verseift wird.

43) Verfahren zur Herstellung des Kupplungsmittels 3 nach AF 10,
dadurch gekennzeichnet, daß eine Lösung von N,O-Bissilyliester 6-aminohexansäure in Methylenchlorid bei -80 bis 0°C zur äquimolaren Lösung von m-Chlorsulfonylbenzoylchlorid in Äthylacetat getropft und nach Konzentration im Vak. mit einer konzentrierten wässrigen Lösung von überschüssigem Natriumazid bei -10 bis 0°C umgesetzt wird.

44) Verfahren zur Herstellung des Kupplungsmittels 4 nach AF 11, dadurch gekennzeichnet, daß m-Chlorsulfonylbenzoylchlorid in einem mit Wasser nicht mischbaren Lösungsmittel mit überschüssiger konzentrierter Natriumazidlösung bei -100 bis $0^{o}C$ 30 Minuten kräftig gerührt, danach mit 11-Aminoundecansäure und der doppelt molaren Menge NaOH-Lösung mindestens 2h umgesetzt und schließlich durch Ansäuern mit HCl isoliert wird.

45) Verfahren zur Herstellung des Kupplungsmittels 5 nach AF 12, dadurch gekennzeichnet, daß eine Lösung von N,O-bis-silyliertem N-Cyclohexyl-β-alanin nach dem Verfahren zur Herstellung des Kupplungsmittels 3 umgesetzt wird.

46) Verfahren zur Herstellung des Kupplungsmittels 6 nach AF 13, dadurch gekennzeichnet, daß das Zwischenprodukt 17 nach Anspruch 31 in THF bei -20 bis $0^{o}C$ mit äquimolaren Mengen Chlorameisensäureisobutylester und Triäthylamin zum gemischten Anhydrid umgesetzt, dann bei -10 bis $0^{o}C$ mit der halbmolaren Lösung von N,N,O-Tristrimethylsilyl L-Lysin in Methylenchlorid zur Reaktion gebracht und schließlich mit 0,1 N HCL gewaschen wird.

47) Verfahren zur Herstellung des Kupplungsmittels 7 nach AF 14, dadurch gekennzeichnet, daß 4-Chlorsulfonylphthalsäureanhydrid mit der äquimolaren Menge N,O-bissilyliester 11-Aminoundecansäure in siedendem Methylenchlorid umgesetzt wird, bis die Anhydridbanden im IR-Sprektrum verschwunden sind, dann das Reaktionsgemisch im Vakuum eingeengt und bei $0^{o}C$ mit einer

konzentrierten wässrigen Lösung von Natriumazid umgesetzt wird.

48) Verfahren zur Herstellung des Kupplungsmittels 8 nach AF 16, dadurch gekennzeichnet, daß das Zwischenprodukt 16 (AF 26) mit äquimolaren Mengen Glutarsäureanhydrid und Triäthylamin, unterhalb 100°C, in siedendem THF, umgesetzt und durch Waschen mit einer wässrigen Säure vom Trialkylamin befreit wird.

49) Verfahren zur Herstellung des Kupplungsmittels 9 nach AF 17, dadurch gekennzeichnet, daß das Zwischenprodukt 17 gemäß dem Verfahren zur Herstellung des Kupplungsmittels 8 umgesetzt wird.

50) Verfahren zur Herstellung des Kupplungsmittels 10 nach AF 19, dadurch gekennzeichnet, daß eine Lösung von N,O-bissiliyliester 11-Aminoundecansäure in Methylenchlorid bei -80 bis 0°C zur äquimolaren Lösung von Chlorsulfonylisocyanat in Methylenchlorid getropft, das Reaktionsgemisch im Vakuum eingeengt, im fünffachen Vakuum THF gelöst, bei -10 bis 0°C mit einer konzentrierten wässrigen Lösung von Natriumazid umgesetzt und mit 0,1 HCl gewaschen wird.

51) Verfahren zur Herstellung des Kupplungsmittels 11 nach AF 20, dadurch gekennzeichnet, daß 4-Chlorsulfonylisocyanat bei -80 bis 0°C zur äquimolaren Menge N,O-bissilyliester 6-Aminohexansäure in Methylenchlorid getropft und das Reaktionsgemisch gemäß Verfahren zur Herstellung des Kupplungsmittels 10 weiterverarbeitet wird.

52) Verfahren zur Herstellung des Kupplungsmittels 12 nach AF 21, dadurch gekennzeichnet, daß das Zwischenprodukt 15 (AF 25) mit der äquimolaren Menge Sulfopropionsäureanhydrid in siedendem Methylenchlorid zur Reaktion kommt, wobei der Umsatz anhand der Abnahme des 10-Signals bei 5,5 µ im IR-Spektrum verfolgt wird.

53) Verfahren zur Herstellung des Kupplungsmittels 13 nach AF 23, dadurch gekennzeichnet, daß 4-Chlorformyloxybenzoylchlorid mit der äquimolaren Menge N,O-bissilyliester 6-Aminohexansäure bei -80 bis $0^{O}C$ in Methylenchlorid tropfenweise versetzt, dann das Reaktionsgemisch im Vakuum eingeengt, bei -10 bis $0^{O}C$ mit einer konzentrierten wässrigen Lösung von Natriumazid umgesetzt und nach Ansäuern mit Salzsäure isoliert wird.

54) Verfahren zur Herstellung des Kupplungsmittels 14 nach AF 24, dadurch gekennzeichnet, daß N-Chlorformylpiperdin-4-carbonsäurechlorid bei -80 bis $0^{O}C$ zur äquimolaren Lösung von N,O-bissilyliester 6-Aminohexansäure in Methylenchlorid getropft, das Reaktionsgemisch im Vakuum eingeengt und gemäß Verfahren zur Herstellung des Kupplungsmittels 6 weiterverarbeitet wird.

55) Verfahren zur Herstellung des Zwischenproduktes 15 nach AF 25, dadurch gekennzeichnet, daß m-Chlorsulfonylbenzoylchlorid gelöst im gleichen Volumen tr. THF bei -20 bis $0^{o}C$ zur 10-fach molaren Menge tr. Äthandiol gegeben, eine äquimolare Menge Triäthylamin zugetropft, anschließend die 1,5-fach molare Menge Natriumazid in möglichst wenig Eiswasser zugegeben, dann das Produkt 15 in der 20-fachen Menge Essigester aufgenommen und 10 x mit Wasser ausgewaschen wird.

56) Verfahren zur Herstellung des Zwischenproduktes 16 nach AF 26,
dadurch gekennzeichnet, daß 4-Azidosulphonylphenylisocyanat zur konzentrierten Lösung der 10-fachen molaren Menge tr. 1,6-Hexandiol in tr. THF gegeben, nach vollständiger Umsetzung (Verschwinden der Isocyanatbande bei 2280 $cm^{-1}$ im IR-Spektrum), mit Äthylacetat verdünnt und das Hexandiol durch ca. 10 maliges Auswaschen mit Wasser entfernt wird.

57) Verfahren zur Herstellung des Zwischenproduktes 17 nach AF 27,
dadurch gekennzeichnet, daß 4-Azidosulfonylnaphthalin-1-isocyanat bei 0 - $20^{o}C$ zur 10-fachen Menge trockenem 1,2 Äthandiol gegeben und dann wie beim Verfahren zur Herstellung des Zwischenproduktes 16 aufgearbeitet wird.

58) Verfahren zur Herstellung des Zwischenproduktes 18 nach AF 28,
dadurch gekennzeichnet, daß N,O-bissilyliester Piperidincarbonsäure bei -20 bis $0^{o}C$ zur Lösung der doppelt molaren Menge Phosgen in einem inerten organischen Lösungsmittel (Chloroform oder Toluol) nach ca. 12 Stunden mit der 1,5-fach molaren Menge destilliertem Thionylchlorid zum Sieden erhitzt (bis zum Ende der $SO_2$- Entwicklung)

und anschließend durch Destillation im Vakuum isoliert wird.

59) Verfahren zur Herstellung des Zwischenproduktes <u>19</u>, nach AF 29, dadurch gekennzeichnet, daß N,O-bissilyliertes Sakosin gemäß Verfahren zur Herstellung des Kupplungsmittels 3 umgesetzt wird.

60) Mineralischer Füllstoff, gekoppelt mit einem Kopplungsmittel, nach einem der AFen 1 - 59,

61) Mineralischer Füllstoff, nach AF 60, dadurch gekennzeichnet, daß er basisch ist.

62) Mineralischer Füllstoff, nach AF 60 oder 61, dadurch gekennzeichnet, daß er aus natürlichen und/oder synthetischen Erdalkalicarbonaten, Dolomit, Calcium-Magnesiumcarbonaten, natürlichem Magnesit, natürlichem Hydromagnesit, synthetischem basischem Magnesiumcarbonat, Magnesiumoxid, Zinkoxid oder anderen Metalloxiden oder -hydroxiden besteht.

63) Mineralischer Füllstoff, nach AF 60 - 62

dadurch gekennzeichnet, daß die Menge des Kopplungsmittels zwischen 0,5 und 5 Gew.%, bezogen auf den Füllstoff, liegt.

64) Verfahren zur Herstellung des mineralischen Füllstoffs, nach AF 60 - 63, dadurch gekennzeichnet, daß das Kopplungsmittel in einem Lösungsmittel gelöst oder dispergiert und so auf den Füllstoff aufgebracht wird, das

Lösungsmittel abdestilliert und der Rückstand getrocknet wird.

65) Verfahren nach AF 60 - 63, dadurch gekennzeichnet, daß der Füllstoff mit dem Kopplungsmittel in einem Mischer bei Raumtemperatur oder bei erhöhter Temperatur gemischt wird, wobei die Temperatur gegebenenfalls überhalb des Schmelzpunktes des Kopplungsmittels liegt.

66) Verfahren nach AF 60 - 63, dadurch gekennzeichnet, daß das Kopplungsmittel direkt oder mit einem geeigneten Lösungsmittel verdünnt zu dem Füllstoff in einem Schnellaufmischer getropft oder aus einer Zerstäubungstrocknungsvorrichtung in Form eines Nebels auf den Füllstoff gesprüht wird oder in einem geeigneten Lösungsmittel gelöst auf den Füllstoff gebracht wird.

67) Verfahren nach AF 60 - 63, dadurch gekennzeichnet, daß das Kopplungsmittel in einem Mischer mit dem Füllstoff vermischt und anschließend das Polymer zugegeben wird.

68) Verfahren nach AF 60 - 63, dadurch gekennzeichnet, daß das Kopplungsmittel in einem Mischer mit dem Polymeren gemischt und anschließend der unbehandelte Füllstoff hinzugefügt wird.

69) Verfahren nach AF 60 - 63, dadurch gekennzeichnet, daß alle drei Komponenten,

nämlich das Polymer, der Füllstoff und das Kopplungsmittel, gleichzeitig in einem Vormischer oder direkt in der Verarbeitungsmaschine (Extruder, Spritzgußmaschine, Presse) vermischt wird.

Anmelder: Plüss Staufer AG
CH-4665 Oftringen (Schweiz)

Patentansprüche

1. Kupplungsmittel zwischen mineralischen Füllstoffen, insbesondere $CaCO_3$ einerseits und Polymeren andererseits,
gekennzeichnet durch die allgemeine Formel

$$Y - R - X$$

worin

X eine oder mehrere Säuregruppen oder deren Alkali- oder Erdalkali-salz(e),

1 Y eine oder mehrere reaktive Gruppen aus der Klasse der organischen Azide als Nitrenquelle und

R ein chemisches Verbindungsstück zwischen den beiden reaktiven Gruppen X und Y in Form eines aliphatischen und/oder olefinischen und/oder aromatischen Zwischenstücks mit 2 - 40 C-Atomen bedeuten.

2. Kupplungsmittel nach Anspruch 1, dadurch gekennzeichnet, daß der funktionelle Teil X eine oder mehrere Säuregruppen aus dem Bereich der $-COOH$, $-SO_3H$, $-OSO_3H$, $-PO_3H_2$, $-OPO_3H_2$-Verbindungen und/oder die Alkali- oder Erdalkali-salze dieser Säuren bedeutet.

3. Kupplungsmittel nach Anspruch 1 oder 2, dadurch gekennzeichnet, daß der funktionelle Teil Y eine oder mehrere reaktive Azidosulfonyl oder Azidoformyl-Gruppen bedeutet.

4. Kupplungsmittel nach einem der Ansprüche 1 bis 3, dadurch gekennzeichnet, daß das Verbindungsstück R aus den Elementen Kohlenstoff und Wasserstoff sowie zusätzlich Sauerstoff, Stickstoff, Silicium und Schwefel bestehen kann.

5. Kupplungsmittel nach einem der Ansprüche 1 bis 4, dadurch gekennzeichnet, daß es eine Verbindung aus der Gruppe der Azidosulfonyl-carbonsäuren mit der allgemeinen Formel $N_3SO_2-A-Z-B-COOH$ ist, wobei

A, B = aliphatische und/oder aromatische Reste mit jeweils 2 - 18 C-Atomen

Z = O, S, N

bedeuten.

6. Kupplungsmittel nach einem der Ansprüche 1 bis 4, dadurch gekennzeichnet, daß es eine Verbindung aus der Gruppe der Azidoformyl-carbonsäuren mit der allgemeinen Formel

$N_3$-CO-Z-A-Z-B-COOH ist, wobei

A,B = aliphatische und/oder aromatische Reste mit jeweils 2 - 18 C-Atomen und

Z = O, S, N

bedeuten.

7. Kupplungsmittel nach einem der Ansprüche 1 bis 5, dadurch gekennzeichnet, daß es eine Verbindung aus der Gruppe der Azidosulfonyl-carbonsäuren mit der allgemeinen Formel

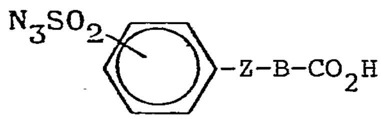

ist, wobei

B = aliphatischer Rest mit 2 - 12 C-Atomen

Z = O, S, N

bedeuten.

8. Kupplungsmittel nach einem der Ansprüche 1 bis 4 und 6, dadurch gekennzeichnet, daß es eine Verbindung aus der Gruppe der Azidoformyl-oxycarbonsäuren mit der allgemeinen Formel

$$N_3CO-O-A-Z-B-COOH$$

ist, wobei

A, B = aliphatische Reste mit 2 - 12 C-Atomen

Z = O, S, N

bedeuten.

9. Kupplungsmittel nach einem der Ansprüche 1 bis 4 und 6, dadurch gekennzeichnet, daß es eine Verbindung aus der Gruppe der N-Azidoformyl-amino-carbonsäuren mit der allgemeinen Formel

$$N_3CO-N\langle^{D}_{A-Z-B-COOH}$$

ist, wobei

A, B = aliphatische Reste mit 2 - 12 C-Atomen

D = aliphatische oder aromatische Reste mit 1 - 12 C-Atomen

Z = O, S, N

bedeuten oder A, D und N zusammen eine cycloaliphatische Gruppe bilden können.

10. Kupplungsmittel nach Anspruch, 1, 5 und 7, dadurch gekennzeichnet, daß die Verknüpfung von A und B über eine Estergruppe vorliegt.

11. Kupplungsmittel nach Anspruch 1, 5, 7 und 10, gekennzeichnet durch die Verbindung

<u>1</u> 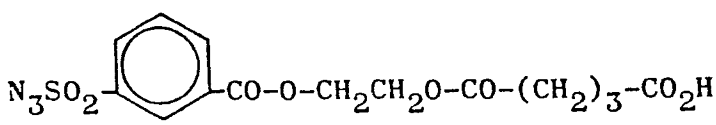

12. Kupplungsmittel nach Anspruch 1, 5, 7 und 10, gekennzeichnet durch die Formel

<u>2</u> 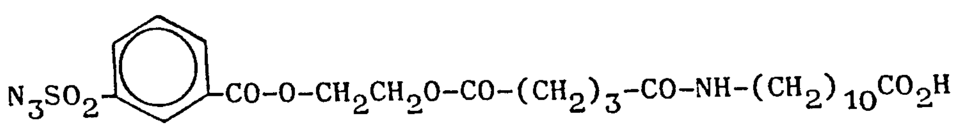

13. Kupplungsmittel nach Anspruch 1, 5 und 7, dadurch gekennzeichnet, daß die Verknüpfung von A und B über eine Amidgruppe vorliegt.

14. Kupplungsmittel nach Anspruch 1, 5, 7 und 13, gekennzeichnet durch die Verbindung

3 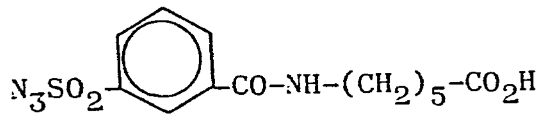

15. Kupplungsmittel nach Anspruch 1, 5, 7 und 13 gekennzeichnet durch die Verbindung

4 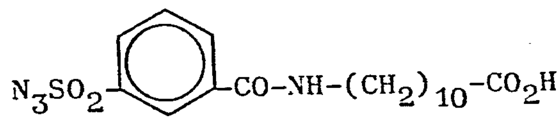

16. Kupplungsmittel nach Anspruch 1, 5, 7 und 13 gekennzeichnet durch die Verbindung

5 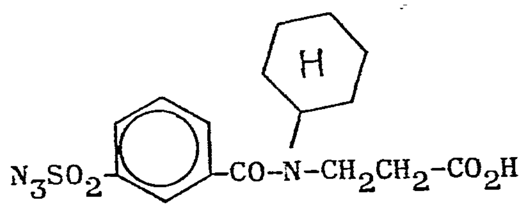

17. Kupplungsmittel nach Anspruch 1, 5 und 13 gekennzeichnet durch die Verbindung

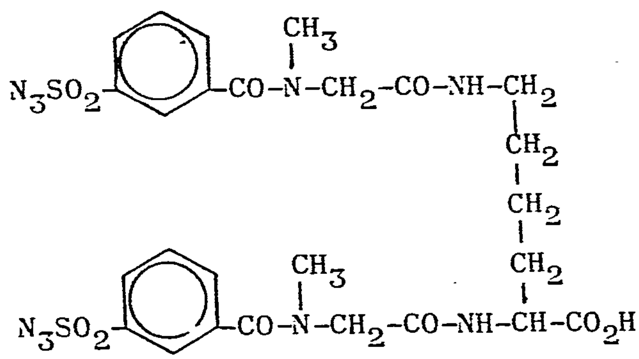 6

18. Kupplungsmittel nach Anspruch 1, 5 und 13 gekennzeichnet durch die Verbindung

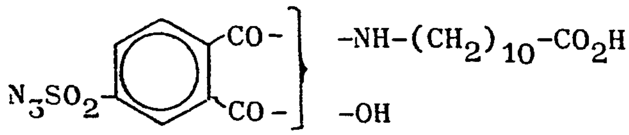

7

19. Kupplungsmittel nach Anspruch 5, dadurch gekennzeichnet, daß die Verknüpfung von A und B über eine Urethangruppe vorliegt.

20. Kupplungsmittel nach Anspruch 1, 5 und 19 gekennzeichnet durch die Verbindung

8

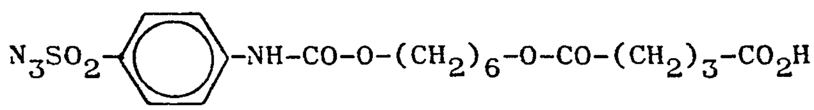

21. Kupplungsmittel nach Anspruch 1, 5 und 19 gekennzeichnet durch die Verbindung

9

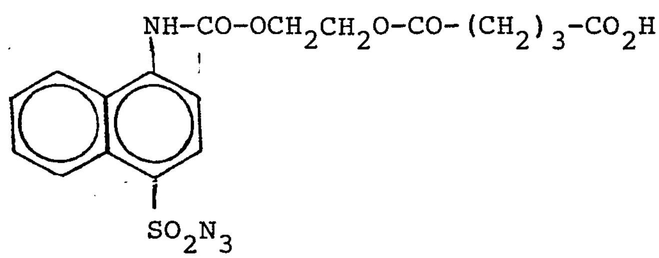

22. Kupplungsmittel nach Anspruch 1 und 5, dadurch gekennzeichnet, daß die Verknüpfung von A und B über eine Harnstoffgruppe vorliegt.

23. Kupplungsmittel nach Anspruch 1, 5 und 22, gekennzeichnet durch die Verbindung

10 $N_3SO_2\text{-NH-CO-NH-}(CH_2)_{10}\text{-}CO_2H$

Anspruch/Ansprüche Nr. 26-33
gilt/gelten als aufgegeben

24. Kupplungsmittel nach Anspruch 1, 5 und 22, gekennzeichnet durch die Verbindung

11 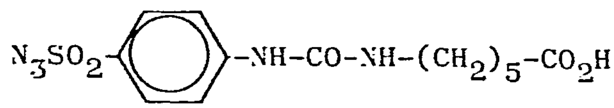

25. Kupplungsmittel nach Anspruch 1 - 4, 2 und 10 gekennzeichnet durch die Verbindung

12 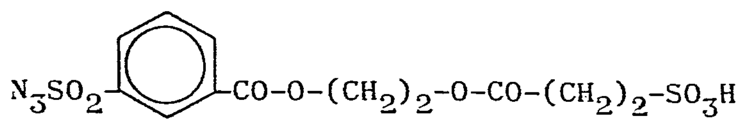

26. Kupplungsmittel nach Anspruch 1, 8 und 9, dadurch gekennzeichnet daß, die Verknüpfung von A und B über eine Amidbindung vorliegt.

27. Kupplungsmittel nach Anspruch 1, 8 und 26 gekennzeichnet durch die Verbindung

13 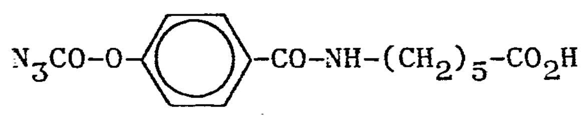

28. Kupplungsmittel nach Anspruch 1, 9 und 26 gekennzeichnet durch die Verbindung

14 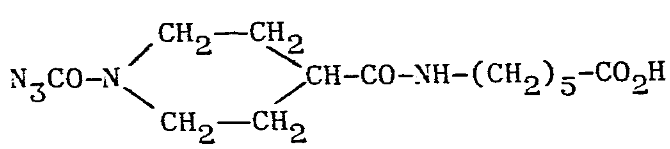

29. 1,2-Äthandiol-(3-azidosulfonyl-)monobenzoat der Formel

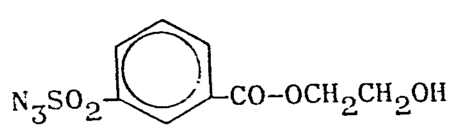 15

30. N-(4-Azidosulfonyl-phenyl)-O-(6-hydroxy-hexyl)-urethan der Formel

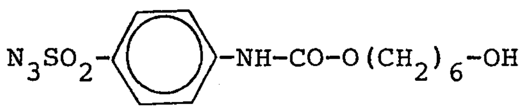

16

31. N-(4-Azidosulfonyl-naphthyl)-O-(2-hydroxy -äthyl)-urethan der Formel

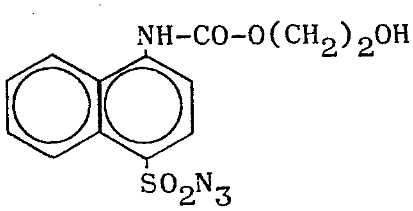

17

32. 1-Chlorformyl-piperidin-4-carbonsäurechlorid der Formel

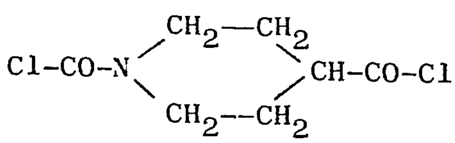

18

33. N-(3-Azidosulfonyl-benzoyl)-sarkosin der Formel

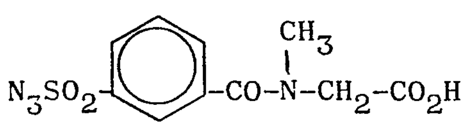

19

34. Verfahren zur Herstellung der Kupplungsmittel nach einem der Ansprüche 1 - 28, dadurch gekennzeichnet, daß stets R-X mit Y verknüpft wird, derart, daß eine organische säuregruppenhaltige Komponente mit einer azidgruppen-

Anspruch/Ansprüche Nr. 26-33
gilt/gelten als aufgegeben

haltigen Komponente durch eine Substitutions- oder Additions-Reaktion verknüpft wird.

35. Verfahren nach Anspruch 34, dadurch gekennzeichnet, daß zunächst eine säuregruppenhaltige bifunktionelle organische Verbindung durch Substitutions- oder Additionsreaktion aufgebaut wird und dann ein reaktionsfähiges Halogen gegen den Azidrest ausgetauscht wird.

36. Verfahren nach Anspruch 34, dadurch gekennzeichnet, daß zunächst der Austausch eines Halogens gegen eine Azidgruppe an einer nichtsäuregruppenhaltigen Komponente erfolgt und dann die Verküpfung mit einer säuregruppenhaltigen Komponente erfolgt.

37. Verfahren nach einem der Ansprüche 34 - 36, dadurch gekennzeichnet, daß zur Verlängerung des Verbindungsstücks R bis auf maximal 40 C-Atome ein Kupplungsmittel Y-R-X an der Säuregruppe X in an sich bekannter Weise aktiviert und mit einer säuregruppenhaltigen Komponente gekoppelt und dadurch verlängert wird.

Anspruch/Ansprüche Nr. 35-44
gilt/gelten als aufgegeben

Anspruch/Ansprüche Nr. 35-44 gilt/gelten als aufgegeben

38. Verfahren zur Herstellung von Kupplungsmitteln nach Anspruch 5, dadurch gekennzeichnet, daß entweder eine organische Chlorsulfonylcarbonsäure mittels eines überschüssigen Metallazids in eine Azidosulfonylcarbonsäure umgewandelt oder ein difunktionelles Sulfonylazid mit äquimolaren Mengen einer ω-Amino, ω-Hydroxy oder ω-Mercaptocarbonsäure gekoppelt wird, so daß die Carboxyl- und Sulfonylazidgruppe unverändert bleiben.

39. Verfahren zur Herstellung von Kupplungsmitteln nach Anspruch 6, 8 und 9, dadurch gekennzeichnet, daß entweder eine Chlorformylcarbonsäure mittels überschüssigen Metallazids in eine Azidoformylcarbonsäure umgewandelt oder eine difunktionelle Azidoformylverbindung mit äquimolaren Mengen einer ω-Amino, ω-Hydroxy oder ω-Mercaptocarbonsäure so gekoppelt wird, daß Azidoformyl- und Carboxylgruppe unverändert bleiben.

40. Verfahren zur Herstellung von Kupplungsmitteln nach Anspruch 10, dadurch gekennzeichnet, daß ein ortho, meta oder para Chlorsulfonylbenzoylchlorid mit einer OH Gruppe eines im 5-20-fachen Überschusses eingesetzten Diols in Gegenwart eines HCl-Acceptors verestert und anschließend mittels eines Metall- oder Ammoniumazides in einen Azidosulfonylbenzoesäureester umgewandelt wird.

41. Verfahren zur Herstellung von Kupplungsmitteln nach Anspruch 13, dadurch gekennzeichnet, daß ein ortho, meta oder

Anspruch/Ansprüche Nr. 35-44 gilt/gelten als aufgegeben

para Chlorsulfonylbenzoylchlorid entweder bei -10 bis +10°C mittels überschüssigen Natriumazids im Wasser/THF-Gemisch zum Azidosulfonylbenzoylazid umgesetzt und dann mit äquimolaren Mengen einer ω-Aminosäure zum entsprechenden Benzamid angesetzt wird, oder daß das Chlorsulfonylbenzoylchlorid mit den äquimolaren Mengen N,O-bissilyliester ω-Aminocarbonsäure bei -50 bis 0°C gekoppelt und anschließend mit überschüssiger Natriumazidlösung zum Sulfonylazid umgesetzt wird.

42. Verfahren zur Herstellung von Kupplungsmitteln nach Anspruch 19,
dadurch gekennzeichnet, daß Zwischenprodukte des Typs 16 und 17 (Ansprüche 30 und 31) an der OH-Gruppe mit äquimolaren Mengen eines einseitig aktivierten Dicarbonsäurederivates oder mit einem Dicarbonsäurehydrid gekoppelt werden.

43. Verfahren zur Herstellung von Kupplungsmitteln gemäß Anspruch 22, dadurch gekennzeichnet, daß ein ortho-, meta- oder para- Chlorsulfonylphenylisocyanat bei Temperaturen unter 100°C mit Metallsalzen oder Silylestern von ω-Aminocarbonsäuren zum Harnstoff umgesetzt und die Carboxylgruppe mittels saurem Waser anschließend freigesetzt wird.

44. Verfahren zur Herstellung von Kupplungsmitteln nach Anspruch 26,
dadurch gekennzeichnet, daß äquimolare Mengen eines O-Azidoformyl-ω-hydroxycarbonsäurechlorids und eines N-Trimethylsilyl-ω-aminocarbonsäuretrimethylsilylesters in einem inerten Lösungsmittel bei -80 bis +10°C umgesetzt und nach Erwärmen auf Raumtemperatur durch Verrühren mit Wasser zur freien Carbonsäure hydrolysiert werden.

45. Verfahren zur Herstellung des Kupplungsmittels 1 nach Anspruch 11, dadurch gekennzeichnet, daß der Alkohol 15 mit äquimolaren Mengen Glutarsäureanhydrid und Triäthylamin in einem inerten trockenen Lösungsmittel bei 0 - 100°C verestert und danach das tertiäre Amin durch Waschen mit einer wässrigen Säure mittels eines Jonenaustauschers entfernt wird.

46. Verfahren zur Herstellung des Kupplungsmittels 2 nach Anspruch 12, dadurch gekennzeichnet, daß das Kupplungsmittel 1 mit überschüssigem, reinem Thionylchlorid in siedendem Chloroform in das Carbonsäurechlorid übergeführt, das restliche Thionylchlorid unter mehrfacher Zugabe von Toluol i. Vak. abdestilliert, das verbleibende Säurechlorid bei 0°C zur Lösung von N,O-bis-silyliester-11-aminoundecansäure in Methylenchlorid getropft und die Silylestergruppe anschließend durch Waschen mit Eiswasser verseift wird.

47. Verfahren zur Herstellung des Kupplungsmittels 3 nach Anspruch 14, dadurch gekennzeichnet, daß eine Lösung von N,O-Bissilyliester 6-aminohexansäure in Methylenchlorid bei -80 bis 0°C zur äquimolaren Lösung von m-Chlorsulfonylbenzoylchlorid in Äthylacetat getropft und nach Konzentration im Vak. mit einer konzentrierten wässrigen Lösung von überschüssigem Natriumazid bei -10 bis 0°C umgesetzt wird.

48. Verfahren zur Herstellung des Kupplungsmittels 4 nach Anspruch 15, dadurch gekennzeichnet, daß m-Chlorsulfonylbenzoylchlorid in einem mit Wasser nicht mischbaren Lösungsmittel mit überschüssiger konzentrierter Natriumazidlösung bei -100 bis $0^{O}C$ 30 Minuten kräftig gerührt, danach mit 11-Aminoundecansäure und der doppelt molaren Menge NaOH-Lösung mindestens 2h umgesetzt und schließlich durch Ansäuern mit HCl isoliert wird.

49. Verfahren zur Herstellung des Kupplungsmittels 5 nach Anspruch 16, dadurch gekennzeichnet, daß eine Lösung von N,O-bis-silyliertem N-Cyclohexyl-β-alanin nach Anspruch 47 umgesetzt wird.

50. Verfahren zur Herstellung des Kupplungsmittels 6 nach Anspruch 17, dadurch gekennzeichnet, daß das Zwischenprodukt 17 nach Anspruch 31 in THF bei -20 bis $0^{O}C$ mit äquimolaren Mengen Chlorameisensäureisobutylester und Triäthylamin zum gemischten Anhydrid umgesetzt, dann bei -10 bis $0^{O}C$ mit der halbmolaren Lösung von N,N,O-Tristrimethylsilyl L-Lysin in Methylenchlorid zur Reaktion gebracht und schließlich mit 0,1 N HCL gewaschen wird.

51. Verfahren zur Herstellung des Kupplungsmittels 7 nach Anspruch 18, dadurch gekennzeichnet, daß 4-Chlorsulfonylphthalsäureanhydrid mit der äquimolaren Menge N,O-bissilyliester 11-Aminoundecansäure in siedendem Methylenchlorid umgesetzt wird, bis die Anhydridbanden im IR-Sprektrum verschwunden sind, dann das Reaktionsgemisch im Vakuum eingeengt und bei $0^{O}C$ mit einer

konzentrierten wässrigen Lösung von Natriumazid umgesetzt wird.

52. Verfahren zur Herstellung des Kupplungsmittels <u>8</u> nach Anspruch 20, dadurch gekennzeichnet, daß das Zwischenprodukt <u>16</u> (Anspruch 30) mit äquimolaren Mengen Glutarsäureanhydrid und Triäthylamin, unterhalb 100°C, in siedendem THF, umgesetzt und durch Waschen mit einer wässrigen Säure vom Trialkylamin befreit wird.

53. Verfahren zur Herstellung des Kupplungsmittels <u>9</u> nach Anspruch 21, dadurch gekennzeichnet, daß das Zwischenprodukt <u>17</u> (Anspruch 17) gemäß Verfahren nach Anspruch 52 umgesetzt wird.

54. Verfahren zur Herstellung des Kupplungsmittels <u>10</u> nach Anspruch 23, dadurch gekennzeichnet, daß eine Lösung von N,O-bissiliyliester 11-Aminoundecansäure in Methylenchlorid bei -80 bis 0°C zur äquimolaren Lösung von Chlorsulfonylisocyanat in Methylenchlorid getropft, das Reaktionsgemisch im Vakuum eingeengt, im fünffachen Vakuum THF gelöst, bei -10 bis 0°C mit einer konzentrierten wässrigen Lösung von Natriumazid umgesetzt und mit 0,1 HCl gewaschen wird.

55. Verfahren zur Herstellung des Kupplungsmittels <u>11</u> nach Anspruch 24, dadurch gekennzeichnet, daß 4-Chlorsulfonylisocyanat bei -80 bis 0°C zur äquimolaren Menge N,O-bissilyliester 6-Aminohexansäure in Methylenchlorid getropft und das Reaktionsgemisch gemäß Verfahren nach Anspruch 54 weiterverarbeitet wird.

56. Verfahren zur Herstellung des Kupplungsmittels 12 nach Anspruch 25, dadurch gekennzeichnet, daß das Zwischenprodukt 15 (Anspruch 29) mit der äquimolaren Menge Sulfopropionsäureanhydrid in siedendem Methylenchlorid zur Reaktion kommt, wobei der Umsatz anhand der Abnahme des 10-Signals bei 5,5 μ im IR-Spektrum verfolgt wird.

57. Verfahren zur Herstellung des Kupplungsmittels 13 (Anspruch 27), dadurch gekennzeichnet, daß 4-Chlorformyloxybenzoylchlorid mit der äquimolaren Menge N,O-bissilyliester 6-Aminohexansäure bei -80 bis $0^{o}C$ in Methylenchlorid tropfenweise versetzt, dann das Reaktionsgemisch im Vakuum eingeengt, bei -10 bis $0^{o}C$ mit einer konzentrierten wässrigen Lösung von Natriumazid umgesetzt und nach Ansäuern mit Salzsäure isoliert wird.

58. Verfahren zur Herstellung des Kupplungsmittels 14 nach Anspruch 28, dadurch gekennzeichnet, daß N-Chlorformylpiperdin-4-carbonsäurechlorid bei -80 bis $0^{o}C$ zur äquimolaren Lösung von N,O-bissilyliester 6-Aminohexansäure in Methylenchlorid getropft, das Reaktionsgemisch im Vakuum eingeengt und gemäß Verfahren nach Anspruch 50 weiterverarbeitet wird.

59. Verfahren zur Herstellung des Zwischenproduktes 15 nach Anspruch 29, dadurch gekennzeichnet, daß m-Chlorsulfonylbenzoyl-

Anspruch/Ansprüche Nr. 57-73
gilt/gelten als aufgegeben

chlorid gelöst im gleichen Volumen tr. THF bei -20 bis 0°C zur 10-fach molaren Menge tr. Äthandiol gegeben, eine äquimolare Menge Triäthylamin zugetropft, anschließend die 1,5-fach molare Menge Natriumazid in möglichst wenig Eiswasser zugegeben, dann das Produkt 15 in der 20-fachen Menge Essigester aufgenommen und 10 x mit Wasser ausgewaschen wird.

60. Verfahren zur Herstellung des Zwischenproduktes 16 nach Anspruch 30, dadurch gekennzeichnet, daß 4-Azidosulphonylphenylisocyanat zur konzentrierten Lösung der 10-fachen molaren Menge tr. 1,6-Hexandiol in tr. THF gegeben, nach vollständiger Umsetzung (Verschwinden der Isocyanatbande bei 2280 $cm^{-1}$ im IR-Spektrum), mit Äthylacetat verdünnt und das Hexandiol durch ca. 10 maliges Auswaschen mit Wasser entfernt wird.

61. Verfahren zur Herstellung des Zwischenproduktes 17 nach Anspruch 31, dadurch gekennzeichnet, daß 4-Azidosulfonylnaphthalin-1-isocyanat bei 0 - 20°C zur 10-fachen Menge trockenem 1,2 Äthandiol gegeben und dann wie beim Verfahren gemäß Anspruch 60 aufgearbeitet wird.

62. Verfahren zur Herstellung des Zwischenproduktes 18 nach Anspruch 32, dadurch gekennzeichnet, daß N,O-bissilyliester Piperidincarbonsäure bei -20 bis 0°C zur Lösung der doppelt molaren Menge Phosgen in einem inerten organischen Lösungsmittel (Chloroform oder Toluol) nach ca. 12 Stunden mit der 1,5-fach molaren Menge destilliertem Thionylchlorid zum Sieden erhitzt (bis zum Ende der $SO_2$- Entwicklung)

Anspruch/Ansprüche Nr. 57-73
gilt/gelten als aufgegeben

und anschließend durch Destillation im Vakuum isoliert wird.

63. Verfahren zur Herstellung des Zwischenproduktes 19 nach Anspruch 33, dadurch gekennzeichnet, daß N,O-bissilyliertes Sakosin gemäß Verfahren nach Anspruch 47 umgesetzt wird.

64. Mineralischer Füllstoff, gekoppelt mit einem Kopplungsmittel nach einem der Ansprüche 1 bis 63.

65. Mineralischer Füllstoff nach Anspruch 64, dadurch gekennzeichnet, daß er basisch ist.

66. Mineralischer Füllstoff nach Anspruch 64 oder 65, dadurch gekennzeichnet, daß er aus natürlichen und/oder synthetischen Erdalkalicarbonaten, Dolomit, Calcium-Magnesiumcarbonaten, natürlichem Magnesit, natürlichem Hydromagnesit, synthetischem basischem Magnesiumcarbonat, Magnesiumoxid, Zinkoxid oder anderen Metalloxiden oder -hydroxiden besteht.

67. Mineralischer Füllstoff nach einem der Ansprüche 64 bis 66, dadurch gekennzeichnet, daß die Menge des Kopplungsmittels zwischen 0,5 und 5 Gew.%, bezogen auf den Füllstoff, liegt.

68. Verfahren zur Herstellung des mineralischen Füllstoffs nach einem der Ansprüche 64 bis 67, dadurch gekennzeichnet, daß das Kopplungsmittel in einem Lösungsmittel gelöst oder dispergiert und so auf den Füllstoff aufgebracht wird, das

Anspruch/Ansprüche Nr. 57-73 gilt/gelten als aufgegeben

Lösungsmittel abdestilliert und der Rückstand getrocknet wird.

69. Verfahren nach einem der Ansprüche 64 bis 67, dadurch gekennzeichnet, daß der Füllstoff mit dem Kopplungsmittel in einem Mischer bei Raumtemperatur oder bei erhöhter Temperatur gemischt wird, wobei die Temperatur gegebenenfalls überhalb des Schmelzpunktes des Kopplungsmittels liegt.

70. Verfahren nach Anspruch 64 bis 67, dadurch gekennzeichnet, daß das Kopplungsmittel direkt oder mit einem geeigneten Lösungsmittel verdünnt zu dem Füllstoff in einem Schnellaufmischer getropft oder aus einer Zerstäubungstrocknungsvorrichtung in Form eines Nebels auf den Füllstoff gesprüht wird oder in einem geeigneten Lösungsmittel gelöst auf den Füllstoff gebracht wird.

71. Verfahren nach einem der Ansprüche 64 bis 67, dadurch gekennzeichnet, daß das Kopplungsmittel in einem Mischer mit dem Füllstoff vermischt und anschließend das Polymer zugegeben wird.

72. Verfahren nach einem der Ansprüche 64 bis 67, dadurch gekennzeichnet, daß das Kopplungsmittel in einem Mischer mit dem Polymeren gemischt und anschließend der unbehandelte Füllstoff hinzugefügt wird.

73. Verfahren nach einem der Ansprüche 64 bis 67, dadurch gekennzeichnet, daß alle drei Komponenten,

Anspruch/Ansprüche Nr. 57-73
gilt/gelten als aufgegeben

nämlich das Polymer, der Füllstoff und das Kopplungsmittel, gleichzeitig in einem Vormischer oder direkt in der Verarbeitungsmaschine (Extruder, Spritzgußmaschine, Presse) vermischt wird.

Anspruch/Ansprüche Nr. 57-73 gilt/gelten als aufgegeben